# EUROPÄISCHE PATENTSCHRIFT

(11) **EP 3 966 019 B1**
(45) Veröffentlichungstag und Bekanntmachung des Hinweises auf die Patenterteilung: **27.09.2023**
(21) Anmeldenummer: 20725676.9
(22) Anmeldetag: 07.05.2020
(51) Int. Cl.: B29C 64/124, B29C 64/255, B33Y 30/00

(54) **BAUBOX-SYSTEM FÜR EINEN 3D-DRUCKER, 3D-DRUCKER, 3D-DRUCKER-SYSTEM, VERWENDUNG DES BAUBOX-SYSTEMS UND 3D-DRUCK-VERFAHREN**
CONSTRUCTION BOX SYSTEM FOR A 3D PRINTER, 3D PRINTER, 3D PRINTER SYSTEM, USE OF THE CONSTRUCTION BOX SYSTEM AND 3D PRINTING METHOD
SYSTÈME DE CAISSES DE CONSTRUCTION POUR UNE IMPRIMANTE 3D, IMPRIMANTE 3D, SYSTÈME D'IMPRIMANTE 3D, UTILISATION DU SYSTÈME DE CAISSES DE CONSTRUCTION ET PROCÉDÉ D'IMPRESSION 3D

(30) Priorität: 09.05.2019 EP 19173550
(43) Veröffentlichungstag der Anmeldung: 16.03.2022
(73) Patentinhaber: ExOne GmbH, 86368 Gersthofen (DE)
(72) Erfinder: HUBER, Thomas, 86551 Aichach (DE); FISCHER, Michael, 85229 Markt Indersdorf (DE); LADEWIG, Roland, 24340 Windeby (DE)
(74) Vertreter: Viering, Jentschura & Partner mbB Patent- und Rechtsanwälte
(86) Internationale Anmeldenummer: PCT/EP2020/062666
(87) Internationale Veröffentlichungsnummer: WO 2020/225345

(56) Entgegenhaltungen:
- WO-A1-2017/177603
- CN-A- 106 001 417
- CN-B- 106 001 416
- DE-U1-202004 018 586
- JP-A- 2016 221 875
- US-A1- 2007 057 412
- US-A1- 2013 004 607

## Beschreibung

Die vorliegende Erfindung betrifft ein Baubox-System für einen 3D-Drucker, einen 3D-Drucker mit dem Baubox-System, ein 3D-Drucker-System mit dem 3D-Drucker, eine Verwendung des Baubox-Systems sowie ein 3D-Druck-Verfahren.

Es sind verschiedene generative Fertigungsverfahren bzw. 3D-Druck-Verfahren (und folglich verschiedene Arten von 3D-Druckern, also Maschinen/Anlagen zum schichtweisen Aufbau eines Bauteils) bekannt.

Einige generative Fertigungsverfahren haben die folgenden Schritte gemeinsam:
(1) Es wird zunächst Partikelmaterial (bzw. partikelförmiges Baumaterial) vollflächig/durchgängig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich (entsprechend dem zu fertigenden Bauteil) selektiv verfestigt, zum Beispiel durch selektives Aufdrucken von Behandlungsmittel, zum Beispiel Bindemittel, alternativ zum Beispiel durch Lasersintern.
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht aufgetragen wird (alternativ können zum Beispiel der Beschichter und die Druckvorrichtung jeweils um eine Schichtdicke angehoben werden).
(4) Schließlich kann das gefertigte Bauteil, das aus den verfestigten Teilbereichen gebildet ist und von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" oder "Wechselbehälter" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Ein Beispiel für eine Baubox ist zum Beispiel in DE 10 2009 056 696 A1 beschrieben. Ein anderes Beispiel für eine Baubox ist zum Beispiel in DE 20 2006 010 327 U1 beschrieben.

In dem obigen Schritt (1) kommt in der Regel ein Beschichter (auch "Recoater" genannt) zum Einsatz. Es sind unterschiedliche Beschichter zur Verwendung in einem 3D-Drucker bekannt, mit denen ein partikelförmiges Baumaterial in Form einer gleichmäßigen, vollflächigen/durchgängigen Schicht auf das Baufeld (auch Baufläche oder Baubereich genannt) aufgebracht werden kann.

Eine Art von Beschichter verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden.

Eine andere Art von Beschichter (sog. "Behälter-Beschichter", zum Beispiel "Schlitz-Beschichter") verwendet einen Behälter, der einen inneren Hohlraum zur Aufnahme von partikelförmigem Baumaterial definiert, und hat einen (zum Beispiel langgestreckten) Ausgabebereich, zum Beispiel aufweisend einen (zum Beispiel langestreckten) Ausgabeschlitz, zum Ausgeben des partikelförmigen Baumaterials. Der Behälter-Beschichter kann zum Beispiel über ein/das Baufeld hinweg verfahrbar sein (zum Beispiel horizontal, zum Beispiel quer zu seiner Längsrichtung), wobei das partikelförmige Baumaterial durch den (langgestreckten) Ausgabebereich auf das Baufeld ausgebbar ist, um dadurch eine gleichmäßige, vollflächige/durchgängige Baumaterial-Schicht auf das Baufeld bzw. die Bauplattform aufzubringen. Der Beschichter kann zum Beispiel langgestreckt sein, um die Länge oder Breite eines rechteckigen Baufelds zu überspannen bzw. abzudecken.

In dem obigen Schritt (2) kann zum Beispiel eine Druckvorrichtung mit einem Druckkopf zum Einsatz kommen, der auf einen Teilbereich einer/der zuvor aufgebrachten Baumaterial-Schicht gesteuert ein Behandlungsmittel aufbringt (sog. "Binder-Jetting"). Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel sein/enthalten, zum Beispiel eine BindemittelKomponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

WO 2017/177603 A1 offenbart einen 3D-Drucker mit mehreren Bauboxen, aufweisend Bauboxen, ein Baubox-Transportsystem und einen Baubox-Hebemechanismus. JP 2016 221875 A offenbart einen 3D-Drucker mit einer auswechselbaren Baubox. CN 106 001 417 A offenbart einen Baubox-Hebemechanismus, der im 3D-Druck angewendet wird. US 2007/057412 A1 offenbart eine Vorrichtung und ein Verfahren zum Ausrichten einer entnehmbaren Baukammer innerhalb einer Prozesskammer. DE 20 2004 018586 U1 offenbart eine Vorrichtung zum Herstellen eines dreidimensionalen Objektes.

Es kann als eine Aufgabe der vorliegenden Erfindung angesehen werden, ein Baubox-System für einen 3D-Drucker und ein 3D-Druck-Verfahren anzugeben, mit denen ein Bauteil effizient im 3D-Druck herstellbar ist.

Hierzu stellt die vorliegende Erfindung ein Baubox-System für einen 3D-Drucker nach Anspruch 1, ein Baubox-System für einen 3D-Drucker nach Anspruch 11, einen 3D-Drucker nach Anspruch 12, ein 3D-Drucker-System nach Anspruch 13, eine Verwendung des Baubox-Systems nach Anspruch 14 und ein 3D-Druck-Verfahren nach Anspruch 15 bereit.

Gemäß verschiedenen Aspekten der Erfindung hat ein Baubox-System für einen 3D-Drucker eine Baubox mit einer Seitenwandstruktur (zum Beispiel Baubox-Seitenwandstruktur) und einer innerhalb der Seitenwandstruktur aufgenommenen Bauplattform, wobei die Seitenwandstruktur einen nach oben hin offenen Bauboxinnenraum (zum Beispiel Bauraum) zum Aufbauen eines Bauteils (zum Beispiel mindestens eines Bauteils, zum Beispiel ein oder mehrerer Bauteile) im 3D-Druck (zum Beispiel mittels eines 3D-Druck-Verfahrens) begrenzt, der nach unten hin von der Bauplattform begrenzt ist, und eine Trägerstruktur, die einen eigenen, in die Trägerstruktur integrierten Antrieb aufweist und an der die Baubox (zum Beispiel wiederholt, zum Beispiel mehrfach) lösbar anbringbar (zum Beispiel befestigbar, zum Beispiel angebracht, zum Beispiel befestigt) ist, so dass die Baubox wiederholt nach dem Aufbauen des Bauteils in dem Bauboxinnenraum von der Trägerstruktur entfernt (zum Beispiel gelöst und entfernt) und anschließend wieder an der Trägerstruktur angebracht (zum Beispiel befestigt, zum Beispiel angebracht und befestigt) werden kann.

Da die Baubox von der Trägerstruktur lösbar ist, kann die Baubox zum Beispiel getrennt von der Trägerstruktur einem sich dem 3D-Druck anschließenden Prozess (sog. Post-Prozess), wie zum Beispiel einem Entpacken und/oder Härten und/oder Trocknen des in der Baubox hergestellten Bauteils, zugeführt werden. Währenddessen kann an der Trägerstruktur zum Beispiel eine andere Baubox angeordnet werden/sein, so dass zum Beispiel parallel/gleichzeitig zu dem in der einen Baubox durchgeführten Post-Prozess in der anderen Baubox 3D gedruckt werden kann bzw. ein Bauteil im 3D-Druck aufgebaut werden kann. Dies ermöglicht zum Beispiel geringe Leerzeiten der einzelnen Komponenten des Baubox-Systems (wie zum Beispiel der Baubox(en) und/oder der Trägerstruktur). Da die Trägerstruktur einen eigenen, in die Trägerstruktur integrierten Antrieb aufweist, kann die Baubox zum Beispiel antriebsmittelfrei (d.h. ohne eigenen, in die Baubox integrierten Antrieb) ausgebildet sein. Dies ermöglicht zum Beispiel einen einfachen und kostengünstigen Aufbau der (zum Beispiel jeweiligen) Baubox, wobei dennoch ein einfaches Handling der Baubox mittels der (zum Beispiel gemeinsamen) Trägerstruktur möglich ist. Zudem kann die Baubox dann zum Beispiel auch derartigen Post-Prozessen zugänglich werden, die für die Trägerstruktur und deren Antrieb schädliche Bedingungen aufweisen. Somit ermöglicht das Baubox-System zum Beispiel eine effiziente Durchführung von 3D-Druck-Verfahren und/oder eine effiziente Herstellung 3D-gedruckter Bauteile und/oder einen effizienten Betrieb eines 3D-Druckers bzw. eines 3D-Drucker-Systems.

Die Seitenwandstruktur der Baubox kann zum Beispiel mindestens eine Seitenwand (zum Beispiel vier Seitenwände) aufweisen. Die Seitenwandstruktur der Baubox kann zum Beispiel von vier Seitenwänden (zum Beispiel Baubox-Seitenwänden) ausgebildet sein. Die Baubox-Seitenwandstruktur (zum Beispiel die vier Baubox-Seitenwände) kann in der Draufsicht zum Beispiel eine Rechteckform haben, zum Beispiel aufweisend zwei lange und zwei kurze Seiten.

Der in die Trägerstruktur integrierte Antrieb kann zum Beispiel einen Hubantrieb (zum Beispiel Bauplattform-Hubantrieb) zum Höhenverstellen der Bauplattform aufweisen, der eingerichtet ist, um die Bauplattform der Baubox in der Höhe zu verstellen, wenn die Baubox an der Trägerstruktur angebracht ist.

Mit einem/dem in die Trägerstruktur integrierten Hubantrieb kann die Bauplattform zum Beispiel gesteuert und automatisiert zwischen einer obersten Position, in der die Bauplattform zu Beginn eines/des 3D-Druck-Prozesses angeordnet ist, und einer untersten Position, in der die Bauplattform von einer/der Haltestruktur (zum Beispiel der unten beschriebenen Haltestruktur) gehalten ist/wird (und in der die Bauplattform zum Beispiel am Ende eines/des 3D-Druck-Prozesses angeordnet ist), verfahren werden. Dazu kann der Hubantrieb zum Beispiel an eine Steuervorrichtung (zum Beispiel eine zentrale Steuervorrichtung des 3D-Druckers, zum Beispiel eine in die Trägerstruktur integrierte Steuervorrichtung) angeschlossen sein bzw. mit dieser verbunden sein. Eine in die Baubox integrierte Vorrichtung zum Höhenverstellen der Bauplattform kann daher entfallen. Eine in den 3D-Drucker integrierte bzw. an dem 3D-Drucker vorgesehene Vorrichtung zum Höhenverstellen der Bauplattform kann ebenfalls entfallen.

Der in die Trägerstruktur integrierte Antrieb kann zum Beispiel einen Fahrantrieb (zum Beispiel Trägerstruktur-Fahrantrieb) zum Verfahren der Trägerstruktur aufweisen, welcher eingerichtet ist, um das Baubox-System (zum Beispiel die Trägerstruktur mit daran angeordneter Baubox) zwischen einer ersten Position (zum Beispiel einer Bauposition), in der das Baubox-System zum Aufbauen des Bauteils in dem 3D-Drucker angeordnet ist, und einer zweiten Position, in der das Baubox-System zum Beispiel außerhalb des 3D-Druckers angeordnet ist, zu verfahren, zum Beispiel entlang einem Schienensystem oder einem Rollensystem, das sich zwischen der ersten Position und der zweiten Position erstreckt.

Mit einem/dem in die Trägerstruktur integrierten Fahrantrieb kann das Baubox-System zum Beispiel gesteuert und automatisiert zwischen der ersten Position und der zweiten Position verfahren werden. Dazu kann der Fahrantrieb zum Beispiel an eine/die Steuervorrichtung (zum Beispiel eine/die zentrale Steuervorrichtung des 3D-Druckers, zum Beispiel eine/die in die Trägerstruktur integrierte Steuervorrichtung) angeschlossen sein bzw. mit dieser verbunden sein. Eine separate Vorrichtung zum Verfahren des Baubox-Systems bzw. der Trägerstruktur kann daher entfallen. Eine in den 3D-Drucker integrierte bzw. an dem 3D-Drucker vorgesehene Vorrichtung zum Verfahren des Baubox-Systems bzw. der Trägerstruktur kann ebenfalls entfallen.

Die zweite Position kann zum Beispiel eine Position sein, in der eine/die Baubox von der Trägerstruktur gelöst (und zum Beispiel davon entfernt) und/oder an der Trägerstruktur angebracht (und zum Beispiel daran befestigt) wird. Die zweite Position kann zum Beispiel eine Position zum Lösen und Entfernen einer/der Baubox von der Trägerstruktur und/oder zum Anbringen einer/der Baubox an die Trägerstruktur und/oder zum Wechseln bzw. Austauschen einer/der Baubox an der Trägerstruktur sein. Die zweite Position kann zum Beispiel eine Baubox-Wechselposition und/oder eine Baubox-Austauschposition sein.

Wenn der Fahrantrieb und/oder der Hubantrieb in die Trägerstruktur des Baubox-Systems integriert sind, können zum Beispiel entsprechende Vorrichtungen des 3D-Druckers zum Höhenverstellen der Bauplattform und/oder zum Verfahren der Trägerstruktur bzw. des Baubox-Systems zwischen einer/der ersten Position und einer/der zweiten Position entfallen. Dadurch kann zum Beispiel der Aufbau des 3D-Druckers vereinfacht werden. Außerdem können zum Beispiel Wartungsarbeiten am Fahrantrieb und/oder Hubantrieb einfach und kostengünstig außerhalb des 3D-Druckers durchgeführt werden, wobei der 3D-Drucker währenddessen zum Beispiel mit einem anderen Baubox-System weiter betrieben werden kann.

Der Fahrantrieb und/oder der Hubantrieb kann zum Beispiel jeweils als mindestens ein Elektromotor ausgebildet sein. Als Fahrantrieb und/oder als Hubantrieb können zum Beispiel jeweils mehrere Elektromotoren vorgesehen sein, die für einen Synchronlauf gesteuert oder miteinander gekoppelt sind. Der Fahrantrieb kann zum Beispiel von einem Elektromotor ausgebildet sein und der Hubantrieb kann zum Beispiel von zwei miteinander synchronisierten Elektromotoren ausgebildet sein. Der Fahrantrieb und/oder der Hubantrieb kann zum Beispiel eine vertikale Antriebsachse aufweisen.

Die Trägerstruktur kann zum Beispiel über eine Schlepp- oder Rollkabelkette elektrisch mit dem 3D-Drucker in Verbindung stehen, zum Beispiel mit einer/der zentralen Steuervorrichtung des 3D-Druckers, die unter anderem dazu eingerichtet sein kann, um den Fahrantrieb und/oder den Hubantrieb zu steuern, und/oder mit einer zentralen Stromversorgung des 3D-Druckers. Zur Steuerung des Fahrantriebs und/oder des Hubantriebs kann die Trägerstruktur zum Beispiel aber auch eine in die Trägerstruktur integrierte bzw. an dieser angeordnete Steuervorrichtung aufweisen. Zur Stromversorgung des Fahrantriebs und/oder des Hubantriebs kann die Trägerstruktur zum Beispiel aber auch mit einem Akku ausgebildet sein bzw. einen Akku aufweisen.

Der Hubantrieb kann zum Beispiel zum Antreiben mindestens eines (zum Beispiel zwei) an der Trägerstruktur angeordneten Spindeltriebs ausgebildet sein. Der Hubantrieb kann zum Beispiel mindestens einen (zum Beispiel zwei) an der Trägerstruktur angeordneten Spindeltrieb antreiben. Die Trägerstruktur kann zum Beispiel mindestens einen (zum Beispiel zwei) an der Trägerstruktur angebrachten Spindeltrieb aufweisen, der von dem Hubantrieb antreibbar ist bzw. angetrieben wird. Der Spindeltrieb (zum Beispiel jeder der beiden Spindeltriebe) kann zum Beispiel eine (zum Beispiel drehbare) Schraubspindel und eine Spindelmutter aufweisen. Der Spindeltrieb bzw. die Schraubspindel kann zum Beispiel benachbart zu einer Trägerstruktur-Seitenwandstruktur bzw. einer Trägerstruktur-Seitenwand drehbar angeordnet sein. Die Schraubspindel kann zum Beispiel mit dem Hubantrieb (zum Beispiel fest, zum Beispiel lösbar, zum Beispiel mittels einer Kupplung) verbunden sein. Als Hubantrieb können zum Beispiel zwei Elektromotoren vorgesehen sein, die jeweils einen Spindeltrieb antreiben, wobei jeder Spindeltrieb zum Beispiel eine drehbare Schraubspindel und eine Spindelmutter aufweist und wobei die beiden Spindeltriebe zum Beispiel benachbart zu gegenüberliegenden Trägerstruktur-Seitenwänden angeordnet sind. Der Spindeltrieb bzw. die drehbare Schraubspindel kann zum Beispiel eine vertikale Drehachse aufweisen.

Der Fahrantrieb kann zum Beispiel zum Antreiben mindestens eines an der Trägerstruktur befestigten Zahnrads ausgebildet sein. Der Fahrantrieb kann zum Beispiel mindestens ein an der Trägerstruktur befestigtes Zahnrad antreiben. Die Trägerstruktur kann zum Beispiel mindestens ein an der Trägerstruktur angebrachtes Zahnrad aufweisen, das von dem Fahrantrieb antreibbar ist bzw. angetrieben wird. Das Zahnrad kann zum Beispiel mit dem Fahrantrieb (zum Beispiel fest, zum Beispiel lösbar, zum Beispiel mittels einer Kupplung) verbunden sein. Das Zahnrad kann zum Beispiel an der Unterseite der Trägerstruktur angebracht sein. Das Zahnrad kann zum Beispiel an einer Außenseite der Trägerstruktur angebracht sein, zum Beispiel in einem unteren Bereich der Außenseite. Das Zahnrad kann zum Beispiel eine vertikale Radebene oder eine horizontale Radebene aufweisen. Das Zahnrad kann zum Beispiel ein stehendes oder liegendes Zahnrad sein. Es können zum Beispiel mehrere Zahnräder an der Trägerstruktur angebracht sein, die von einem gemeinsamen Elektromotor mittels eines Getriebes oder von synchron laufenden gesonderten Elektromotoren angetrieben werden. Das an der Trägerstruktur befestigte Zahnrad kann zum Beispiel mit einer Zahnstange zusammenwirken. Hierzu kann das Zahnrad zum Beispiel in die Zahnstange eingreifen und auf der Zahnstange abrollen, wenn es von dem Fahrantrieb angetrieben wird, so dass das Baubox-System entlang der Zahnstange verfahrbar ist. Die Zahnstange kann zum Beispiel eine seitliche Zahnfläche aufweisen, in der ein Zahnrad mit horizontaler Radebene seitlich eingreift. Die Zahnstange kann zum Beispiel zwischen zwei Roll- oder Gleitschienen, zum Beispiel benachbart zu einer der beiden Roll- oder Gleitschienen, eines/des Schienensystems angeordnet sein, entlang denen die Trägerstruktur mit Gleitkufen gleiten/rollen kann. Alternativ kann die Zahnstange zum Beispiel durch eine der beiden Roll- oder Gleitschienen gebildet sein, auf denen die Trägerstruktur steht, wozu die Seitenfläche der Roll- oder Gleitschiene mit Zähnen versehen ist.

Der Hubantrieb und/oder der Fahrantrieb und/oder der Spindeltrieb können zum Beispiel außerhalb der Seitenwandstruktur der Baubox angeordnet sein, wenn die Baubox an der Trägerstruktur angebracht ist, zum Beispiel in der Draufsicht von oben auf das Baubox-System neben der Baubox benachbart zu der Seitenwandstruktur der Baubox und/oder benachbart zu mindestens einer Seitenwand der Trägerstruktur, zum Beispiel im Fall einer länglich ausgebildeten Baubox in Längsrichtung vor und/oder hinter der Seitenwandstruktur der Baubox und/oder vor und/oder hinter mindestens einer Seitenwand der Trägerstruktur. Dadurch kann das Baubox-System zum Beispiel mit einer geringen Höhe und somit kompakt ausgebildet sein. Außerdem kann zum Beispiel der Hubantrieb und/oder der Fahrantrieb und/oder der Spindeltrieb einfach zugänglich sein.

Die Trägerstruktur kann zum Beispiel länglich ausgebildet sein und der Hubantrieb und/oder der Fahrantrieb und/oder der Spindeltrieb können zum Beispiel an mindestens einem Längsende der Trägerstruktur angeordnet sein. Zum Beispiel kann der Fahrantrieb an einem ersten Längsende der Trägerstruktur angeordnet sein und der Hubantrieb an dem ersten und einem zweiten Längsende der Trägerstruktur angeordnet sein. Dadurch kann das Baubox-System zum Beispiel mit einer geringen Höhe und somit kompakt ausgebildet sein. Außerdem kann zum Beispiel der Hubantrieb und/oder der Fahrantrieb und/oder der Spindeltrieb einfach zugänglich sein.

Die Bauplattform kann zum Beispiel von ein oder mehreren (zum Beispiel in Vertikalrichtung bzw. Höhenrichtung verstellbaren) Stützstrukturen, zum Beispiel ein oder mehreren Stützarmen (zum Beispiel aufweisend eine L-Struktur), untergriffen werden, die mit dem Hubantrieb (zum Beispiel fest, zum Beispiel lösbar, zum Beispiel mittels einer Kupplung) in Verbindung stehen und von diesem antreibbar sind, wenn die Baubox an der Trägerstruktur angebracht ist. In der Seitenwandstruktur der Baubox und/oder in einer Trägerstruktur-Seitenwandstruktur können zum Beispiel ein oder mehrere Schlitze (zum Beispiel in Höhenrichtung verlaufende Längsschlitze) ausgebildet sein, durch welche hindurch sich die ein oder mehreren Stützstrukturen erstrecken. Die Schlitze können sich zum Beispiel von einem unteren Ende (zum Beispiel einem unteren Rand) der Trägerstruktur-Seitenwandstruktur bzw. der Baubox-Seitenwandstruktur in Richtung nach oben (zum Beispiel vertikal nach oben) erstrecken. Die Schlitze können zum Beispiel eingerichtet sein (zum Beispiel eine Erstreckung (zum Beispiel Länge) in Höhenrichtung (bzw. Vertikalrichtung) haben), so dass die Bauplattform zwischen einer untersten Position, in der die Bauplattform von einer Haltestruktur (zum Beispiel der unten beschriebenen Haltestruktur) gehalten ist, und einer obersten Position, in der ein Boden (zum Beispiel ein oberer Teil bzw. oberer Abschnitt, zum Beispiel eine Arbeitsfläche) der Bauplattform mit einem oberen Rand der Baubox-Seitenwandstruktur im Wesentlichen auf gleicher Höhe angeordnet ist (und in der die Bauplattform zu Beginn eines/des 3D-Druck-Prozesses angeordnet ist), verfahrbar ist. Die Stützstruktur kann zum Beispiel mit der Spindelmutter (zum Beispiel fest, zum Beispiel lösbar) verbunden sein, zum Beispiel über ein Stützstruktur-Befestigungselement, an dem die Stützstruktur befestigt ist und das mit der Spindelmutter (zum Beispiel fest, zum Beispiel lösbar) verbunden ist. Dadurch kann zum Beispiel eine sichere und zuverlässige Höhenverstellung der Bauplattform erreicht werden. Außerdem kann das Baubox-System dadurch zum Beispiel kompakt und zuverlässig ausgebildet sein.

Die ein oder mehreren Stützstrukturen können zum Beispiel mittels des Hubantriebs in Höhenrichtung (bzw. Vertikalrichtung) verstellbar sein bzw. verstellt werden. Die ein oder mehreren Stützstrukturen können sich zum Beispiel jeweils durch einen zugeordneten Schlitz in der Trägerstruktur-Seitenwandstruktur erstrecken, zum Beispiel durch einen zugeordneten Schlitz in einer Trägerstruktur-Seitenwand, zum Beispiel in Richtung einer gegenüberliegenden Trägerstruktur-Seitenwand. Die ein oder mehreren Stützstrukturen können zum Beispiel dazu eingerichtet sein, um mit der Bauplattform lösbar in Kontakt zu kommen bzw. sein, wenn die Baubox an der Trägerstruktur angebracht ist, zum Beispiel so dass die Bauplattform durch eine Vertikalbewegung (bzw. Bewegung in Höhenrichtung) der Stützstrukturen höhenverstellbar ist.

Der Hubantrieb und/oder der Fahrantrieb und/oder der Spindeltrieb können zum Beispiel in einem Zwischenraum, der zwischen einer Trägerstruktur-Seitenwand und einer Verkleidungswand der Trägerstruktur ausgebildet ist, angeordnet sein. Dadurch kann zum Beispiel der Hubantrieb und/oder der Fahrantrieb und/oder der Spindeltrieb einfach zugänglich sein.

Die Trägerstruktur kann zum Beispiel eine Trägerstruktur-Seitenwandstruktur aufweisen, welche die Seitenwandstruktur der Baubox in Umfangsrichtung zumindest abschnittsweise umgibt, zum Beispiel an den beiden Stirnseiten einer länglich ausgebildeten Baubox umgibt, zum Beispiel an den beiden Stirnseiten einer länglich ausgebildeten Baubox vollständig umgibt, zum Beispiel wenn die Baubox an der Trägerstruktur angebracht ist. Die Trägerstruktur-Seitenwandstruktur kann zum Beispiel in ihrer Form der Seitenwandstruktur der Baubox entsprechend ausgebildet sein. Die Trägerstruktur-Seitenwandstruktur kann zum Beispiel in ihrer Form komplementär zu der Seitenwandstruktur der Baubox ausgebildet sein. Die Trägerstruktur-Seitenwandstruktur kann zum Beispiel mindestens eine Trägerstruktur-Seitenwand (zum Beispiel zwei Trägerstruktur-Seitenwände) aufweisen. Dadurch kann zum Beispiel eine einfache Anbringung der Baubox an die Trägerstruktur und/oder eine einfache Entfernung der Baubox von der Trägerstruktur erreicht werden.

Die Trägerstruktur bzw. die Trägerstruktur-Seitenwandstruktur kann zum Beispiel zwei sich gegenüberliegende Trägerstruktur-Seitenwände aufweisen, zwischen denen die Baubox anbringbar ist, zum Beispiel so dass Abschnitte der Seitenwandstruktur der Baubox (zum Beispiel zwei kurze Baubox-Seitenwände) benachbart zu den Trägerstruktur-Seitenwänden (zum Beispiel zu Abschnitten der Trägerstruktur-Seitenwände) angeordnet sind (zum Beispiel mit einem Abstand von 5 cm oder kleiner, zum Beispiel 3 cm oder kleiner, zum Beispiel 1 cm oder kleiner), zum Beispiel wenn die Baubox an der Trägerstruktur angebracht ist. Dadurch kann zum Beispiel eine einfache Anbringung der Baubox an die Trägerstruktur und/oder eine einfache Entfernung der Baubox von der Trägerstruktur erreicht werden. Der Antrieb (zum Beispiel der Hubantrieb und/oder der Fahrantrieb) kann zum Beispiel benachbart zu mindestens einer der beiden Trägerstruktur-Seitenwände an einer der Baubox abgewandten Seite der Trägerstruktur-Seitenwand angeordnet sein.

Die Trägerstruktur-Seitenwandstruktur kann zum Beispiel die Seitenwandstruktur der Baubox in Umfangsrichtung unter Ausbildung mindestens einer Aussparung abschnittsweise umgeben (zum Beispiel wenn die Baubox an der Trägerstruktur angebracht ist). Die Aussparung kann zum Beispiel derart dimensioniert sein, dass die Baubox zum Beispiel durch die Aussparung seitlich von der Trägerstruktur entfernt und/oder wieder an der Trägerstruktur angebracht werden kann. Die Trägerstruktur-Seitenwandstruktur kann zum Beispiel zwei gegenüberliegende Aussparungen aufweisen, die zum Beispiel jeweils derart dimensioniert sein können, dass die Baubox zum Beispiel durch die jeweilige Aussparung seitlich von der Trägerstruktur entfernt und/oder wieder an der Trägerstruktur angebracht werden kann. Die mindestens eine (zum Beispiel beide) Aussparung kann zum Beispiel entlang einer (jeweiligen) langen Seite der Seitenwandstruktur der Baubox verlaufen. Dadurch kann zum Beispiel eine einfache Anbringung der Baubox an die Trägerstruktur und/oder eine einfache Entfernung der Baubox von der Trägerstruktur erreicht werden.

Die Trägerstruktur-Seitenwandstruktur kann zum Beispiel mehrere (zum Beispiel zwei) Trägerstruktur-Seitenwände aufweisen bzw. von diesen zumindest mitausgebildet sein (zum Beispiel ausgebildet sein). Die Trägerstruktur kann zum Beispiel länglich ausgebildet sein. Die Trägerstruktur kann zum Beispiel in der Draufsicht rechteckig ausgebildet sein, zum Beispiel mit zwei kurzen und zwei langen Seiten. Die Trägerstruktur bzw. die Trägerstruktur-Seitenwandstruktur kann zum Beispiel zwei Trägerstruktur-Seitenwände aufweisen, die (zum Beispiel in Längsrichtung) vor und hinter der Baubox angeordnet sind (zum Beispiel benachbart zu der Seitenwandstruktur der Baubox, zum Beispiel benachbart zu den kurzen Seiten der Baubox), wenn die Baubox an der Trägerstruktur angeordnet ist. Die Trägerstruktur bzw. die Trägerstruktur-Seitenwandstruktur kann zum Beispiel eine erste Trägerstruktur-Seitenwand und eine zweite Trägerstruktur-Seitenwand aufweisen, wobei die erste Trägerstruktur-Seitenwand (zum Beispiel in Längsrichtung) vor der Baubox angeordnet ist (zum Beispiel benachbart zu einem ersten Abschnitt der Baubox-Seitenwandstruktur, zum Beispiel benachbart zu einer ersten kurzen Seite der Baubox) und die zweite Trägerstruktur-Seitenwand (zum Beispiel in Längsrichtung) hinter der Baubox angeordnet ist (zum Beispiel benachbart zu einem zweiten Abschnitt der Baubox-Seitenwandstruktur, zum Beispiel benachbart zu einer zweiten kurzen Seite der Baubox), wenn die Baubox an der Trägerstruktur angeordnet ist. Der Hubantrieb und/oder der Fahrantrieb und/oder der Spindeltrieb können zum Beispiel benachbart zu mindestens einer Trägerstruktur-Seitenwand (zum Beispiel beiden Trägerstruktur-Seitenwänden) angeordnet sein, zum Beispiel bei an der Trägerstruktur angeordneter Baubox an einer der Baubox abgewandten Seite einer (jeweiligen) Trägerstruktur-Seitenwand.

Bei an der Trägerstruktur angeordneter Baubox kann die Baubox zum Beispiel derart von der Trägerstruktur abgestützt sein, dass ein oberer Rand der Seitenwandstruktur der Baubox mit einem oberen Rand der Trägerstruktur-Seitenwandstruktur im Wesentlichen auf gleicher Höhe angeordnet ist.

Die Trägerstruktur kann zum Beispiel mindestens ein (zum Beispiel zwei) Baubox-Abstützelement zum Abstützen der Baubox aufweisen, wenn die Baubox an der Trägerstruktur angeordnet ist. Das mindestens eine Baubox-Abstützelement kann zum Beispiel unterhalb der Baubox angeordnet sein, wenn die Baubox an der Trägerstruktur angeordnet ist. Das mindestens eine Baubox-Abstützelement kann zum Beispiel von der Trägerstruktur-Seitenwandstruktur (zum Beispiel von der bzw. den Trägerstruktur-Seitenwänden) zumindest mitausgebildet sein, zum Beispiel ausgebildet sein. Das mindestens eine Baubox-Abstützelement kann zum Beispiel an der Trägerstruktur-Seitenwandstruktur (zum Beispiel an der bzw. den Trägerstruktur-Seitenwänden) befestigt sein, zum Beispiel kann an jeder der beiden Trägerstruktur-Seitenwände, die (zum Beispiel in Längsrichtung) vor und hinter der Baubox angeordnet sind, wenn die Baubox an der Trägerstruktur angeordnet ist, jeweils ein Abstützelement befestigt sein. Die Trägerstruktur kann zum Beispiel zwei sich gegenüberliegende Baubox-Abstützelemente aufweisen. Die beiden sich gegenüberliegenden Baubox-Abstützelemente können sich zum Beispiel jeweils zwischen den beiden Trägerstruktur-Seitenwänden erstrecken und eine geringere Höhe (zum Beispiel geringere Erstreckung in Vertikalrichtung) als die Trägerstruktur-Seitenwände haben. Die beiden sich gegenüberliegenden Baubox-Abstützelemente können zum Beispiel an sich gegenüberliegenden Trägerstruktur-Seitenwänden angeordnet sein.

Die Trägerstruktur kann zum Beispiel zwei (zum Beispiel sich gegenüberliegende) Trägerstruktur-Seitenwände und zwei (zum Beispiel sich gegenüberliegende) Baubox-Abstützelemente aufweisen, wobei zum Beispiel die beiden Trägerstruktur-Seitenwände vor und hinter der (zum Beispiel länglich ausgebildeten) Baubox angeordnet sind und/oder die beiden Trägerstruktur-Seitenwände benachbart zu der Seitenwandstruktur (zum Beispiel zu Abschnitten davon, zum Beispiel zu den kurzen Seiten) der Baubox angeordnet sind, wenn die Baubox an der Trägerstruktur angeordnet ist, und wobei zum Beispiel die beiden Baubox-Abstützelemente derart angeordnet sind, dass die Baubox von den beiden Baubox-Abstützelementen abgestützt ist, wenn die Baubox an der Trägerstruktur angeordnet ist. Dadurch kann zum Beispiel eine einfache Anbringung der Baubox an die Trägerstruktur und/oder eine einfache Entfernung der Baubox von der Trägerstruktur erreicht werden.

Die ein oder mehreren Stützstrukturen können zum Beispiel eine geringere Höhe (zum Beispiel geringere Erstreckung in Vertikalrichtung) als die Baubox-Abstützelemente haben, wenn sich die Stützstrukturen in der untersten Position befinden. Dadurch kann zum Beispiel eine einfache Anbringung der Baubox an die Trägerstruktur und/oder eine einfache Entfernung der Baubox von der Trägerstruktur erreicht werden.

Die Trägerstruktur kann zum Beispiel eine Baubox-Fixiervorrichtung aufweisen, mit der die an der Trägerstruktur lösbar angebrachte Baubox fixiert werden kann, zum Beispiel so dass die Baubox (zum Beispiel die Baubox-Seitenwandstruktur) stabil (zum Beispiel fest, zum Beispiel unbeweglich) in einer gewünschten Position gehalten ist/wird. Die Baubox-Fixiervorrichtung kann zum Beispiel mindestens einen Bolzen (zum Beispiel zwei oder vier Bolzen) aufweisen, der dazu eingerichtet ist, um in eine an der Baubox vorgesehenen Bolzen-Aufnahme-Öffnung einzugreifen. Die Baubox kann zum Beispiel in einer ersten Horizontalrichtung (zum Beispiel kann die erste Horizontalrichtung eine Längsrichtung einer länglichen Baubox bzw. einer länglichen Trägerstruktur sein) von der Trägerstruktur-Seitenwandstruktur (zum Beispiel von zwei Trägerstruktur-Seitenwänden) fixiert werden und in einer zweiten Horizontalrichtung, die zu der ersten Horizontalrichtung senkrecht ist, von der Baubox-Fixiervorrichtung fixiert werden.

Die Trägerstruktur kann zum Beispiel seitliche Führungsrollen aufweisen. Die Führungsrollen können zum Beispiel an der Unterseite der Trägerstruktur angebracht sein. Die Führungsrollen können zum Beispiel an der Außenseite der Trägerstruktur angebracht sein, zum Beispiel in einem unteren Bereich der Außenseite. Die Führungsrollen können zum Beispiel eine vertikale Rollachse haben. Die an der Trägerstruktur angebrachten Führungsrollen können zum Beispiel mit zwei Führungsschienen zusammenwirken, an denen die Führungsrollen abrollen. Eine der beiden Führungsschienen kann zum Beispiel von der Zahnstange gebildet sein, d.h. von derjenigen Seitenfläche der Zahnstange, die der Zahnfläche gegenüberliegt, zum Beispiel von der äußeren Seitenfläche der Zahnstange, wobei die innere Seitenfläche der Zahnstange als Zahnfläche ausgebildet ist. Die andere Führungsschiene kann zum Beispiel durch eine der beiden oben erwähnten Roll- oder Gleitschienen gebildet sein, zum Beispiel von einer inneren Seitenfläche der Schiene. Zum Beispiel können aber auch beide Führungsschienen durch die Roll- oder Gleitschienen gebildet sein oder es können zwei separate Führungsschienen vorgesehen sein. Mit den seitlichen Führungsrollen kann zum Beispiel eine Zentrierung der Trägerstruktur entlang einer Horizontalrichtung senkrecht zur Fahrtrichtung erfolgen, so dass das Baubox-System gezielt in die erste Position gefahren werden kann. Eine gesonderte Zentrierung/Fixierung des Baubox-Systems in der ersten Position entlang der Horizontalrichtung senkrecht zur Fahrtrichtung kann somit entfallen.

Die Trägerstruktur kann zum Beispiel zwei oder mehrere Gleitkufen aufweisen, mit denen die Trägerstruktur auf entsprechenden Schienen eines Schienensystems gleitend aufliegt. Die Schienen des Schienensystems können zum Beispiel Abrollschienen sein, d.h. Rollen aufweisen, auf denen die Gleitkufen rollen. Alternativ können die Schienen des Schienensystems aber auch Gleitschienen sein, d.h. Gleitflächen aufweisen, auf denen die Gleitkufen gleiten.

Die Trägerstruktur kann zum Beispiel eine sich verjüngende Ausricht-Vertiefung aufweisen, zum Beispiel eine Konus-förmige Vertiefung. An dem 3D-Drucker (zum Beispiel an einem Rahmen davon) kann zum Beispiel ein Ausrichtelement, das senkrecht zur Verfahrrichtung des Baubox-Systems horizontal verstellbar ist, angebracht sein, welches einen sich verjüngenden Endabschnitt (zum Beispiel einen Ausrichtdorn, zum Beispiel einen Konus-förmigen Dorn) aufweist, der in der ersten Position des Baubox-Systems seitlich in die Ausricht-Vertiefung eingreift. Die Ausricht-Vertiefung der Trägerstruktur und das verstellbare Ausrichtelement des 3D-Druckers bilden zusammen ein Baubox-System-Fixierungssystem zum Ausrichten des Baubox-Systems entlang der Baubox-System-Verfahrrichtung und zum Fixieren des Baubox-Systems in dem 3D-Drucker (zum Beispiel an dessen Rahmen). Zudem kann das Baubox-System-Fixierungssystem zum Beispiel ein am 3D-Drucker (zum Beispiel an dessen Rahmen) angeordnetes Fixierelement (zum Beispiel einen Bolzen) mit einem flach ausgebildeten Endabschnitt aufweisen, der gegen ein an der Trägerstruktur angebrachtes Anschlagplättchen verstellbar drückbar ist. Als Gegenlager kann zum Beispiel eine Schiene auf der entgegengesetzten Seite der Trägerstruktur dienen. Ferner kann das Baubox-System-Fixierungssystem zum Beispiel einen Sensor aufweisen zum Ermitteln der Position des Baubox-Systems, insbesondere, ob das Baubox-System sich in der ersten Position befindet. Hierzu kann an der Trägerstruktur zum Beispiel ein Sensor-Zielobjekt angebracht sein. Ferner kann das Baubox-System-Fixierungssystem zum Beispiel ein Steuersystem aufweisen, welches einen Antrieb des Ausrichtelements und des Fixierelements derart ansteuert, dass das Ausrichtelement in die Ausrichtvertiefung einfährt und das Fixierelement gegen das Anschlagplättchen gedrückt wird, wenn der Sensor detektiert, dass das Baubox-System in der ersten Position ist.

Die Baubox kann in der Draufsicht zum Beispiel eine Rechteckform haben, mit zwei sich gegenüberliegenden kurzen Baubox-Seitenwänden und zwei sich gegenüberliegenden langen Baubox-Seitenwänden. Die Baubox kann zum Beispiel eine Länge von 1,2 m oder mehr (zum Beispiel 1,3 m oder mehr, zum Beispiel 1,4 m oder mehr, zum Beispiel 1,5 m oder mehr) und 2,0 m oder weniger (zum Beispiel 1,9 m oder weniger, zum Beispiel 1,8 m oder weniger, zum Beispiel 1,7 m oder weniger, zum Beispiel 1,6 m oder weniger) haben. Die Baubox kann zum Beispiel eine Breite von 0,7 m oder mehr (zum Beispiel 0,8 m oder mehr, zum Beispiel 0,9 m oder mehr, zum Beispiel 1,0 m oder mehr) und 1,3 m oder weniger (zum Beispiel 1,2 m oder weniger, zum Beispiel 1,1 m oder weniger) haben. Die Baubox kann zum Beispiel eine Höhe von 0,3 m oder mehr (zum Beispiel 0,4 m oder mehr, zum Beispiel 0,5 m oder mehr) und 0,8 m oder weniger (zum Beispiel 0,7 m oder weniger, zum Beispiel 0,6 m oder weniger, zum Beispiel 0,5 m oder weniger) haben.

Die Baubox kann zum Beispiel an ein oder mehreren Baubox-Seitenwänden, zum Beispiel an jeder der kurzen Baubox-Seitenwände, jeweils ein oder mehrere Baubox-Seitenwand-Öffnungen haben, zum Beispiel in der Form ein oder mehrerer Schlitze (zum Beispiel Längsschlitze), wobei sich die ein oder mehreren Baubox-Seitenwand-Öffnungen zum Beispiel von einem unteren Rand der Baubox-Seitenwandstruktur aus vertikal in Richtung nach oben erstrecken können.

Die Baubox kann zum Beispiel eine Haltestruktur (zum Beispiel Bauplattform-Haltestruktur) aufweisen, die dazu eingerichtet ist, um die Bauplattform in einer untersten Position in der Baubox zu halten. Die Haltestruktur kann zum Beispiel eine Platte aufweisen oder von dieser zumindest mitausgebildet sein (zum Beispiel ausgebildet sein), die zum Beispiel an der Baubox-Seitenwandstruktur (zum Beispiel an einem unteren Ende davon) befestigt ist und an der die Bauplattform abgestützt ist, wenn sich die Bauplattform in einer/der untersten Position in der Baubox befindet. Die Bauplattform kann zum Beispiel auf der Platte aufliegen, wenn sich die Bauplattform in einer/der untersten Position in der Baubox befindet. Die Platte kann zum Beispiel auf dem Baubox-Abstützelement aufliegen, wenn die Baubox an der Trägerstruktur angeordnet ist. Die Platte kann zum Beispiel ein oder mehrere Öffnungen (zum Beispiel Schlitze, zum Beispiel Längsschlitze) haben, die sich zum Beispiel von einem äußeren Rand der Platte nach innen erstrecken. Die Haltestruktur kann zum Beispiel derart ausgebildet sein, dass die Bauplattform (zum Beispiel ein oberer Teil bzw. oberer Abschnitt der Bauplattform, zum Beispiel eine Arbeitsfläche der Bauplattform) in ihrer untersten Position oberhalb der ein oder mehreren Baubox-Seitenwand-Öffnungen angeordnet ist. Die Bauplattform kann zum Beispiel eine Dicke (zum Beispiel Erstreckung in Höhenrichtung bzw. Vertikalrichtung) haben, die gleich oder größer ist, als die Länge (bzw. Erstreckung in Vertikalrichtung bzw. Höhenrichtung) der Baubox-Seitenwand-Öffnungen. Dadurch kann zum Beispiel eine aufwendige Vorrichtung zum Verschließen der Baubox-Seitenwand-Öffnungen entfallen. Die Haltestruktur kann zum Beispiel ein oder mehrere Vorsprünge aufweisen oder von diesen zumindest mitausgebildet sein (zum Beispiel ausgebildet sein), die zum Beispiel von der Seitenwandstruktur der Baubox einwärts (zum Beispiel nach innen) vorspringen, zum Beispiel von den kurzen und/oder den langen Baubox-Seitenwänden in Richtung einer gegenüberliegenden (Baubox-)Seitenwand, und an denen die Bauplattform abgestützt ist, wenn sich die Bauplattform in einer/der untersten Position in der Baubox befindet.

Die Baubox kann zum Beispiel derart an der Trägerstruktur anbringbar sein, dass die beiden kurzen Baubox-Seitenwände jeweils benachbart zu einem Abschnitt der Trägerstruktur-Seitenwandstruktur (zum Beispiel benachbart zu einer jeweiligen Trägerstruktur-Seitenwand, zum Beispiel benachbart zu einer der beiden Trägerstruktur-Seitenwände) angeordnet sind, zum Beispiel jeweils mit einem Abstand von 5 cm oder weniger (zum Beispiel 3 cm oder weniger, zum Beispiel 1 cm oder weniger). Die Baubox kann zum Beispiel an jeder der kurzen Baubox-Seitenwände mindestens eine (zum Beispiel zwei) Baubox-Seitenwand-Öffnung haben, die dazu eingerichtet ist/sind, dass sich die Stützstrukturen hindurch erstrecken können, wenn die Baubox an der Trägerstruktur angeordnet ist, so dass die Bauplattform durch eine Vertikalbewegung (bzw. Bewegung in Höhenrichtung) der Stützstrukturen höhenverstellbar ist, zum Beispiel zwischen einer/der untersten Position, in der die Bauplattform von der Haltestruktur (zum Beispiel der Platte) gehalten ist, und einer/der obersten Position, in der ein Boden (zum Beispiel ein oberer Teil bzw. oberer Abschnitt, zum Beispiel eine Arbeitsfläche) der Bauplattform mit einem/dem oberen Rand der Baubox-Seitenwandstruktur im Wesentlichen auf gleicher Höhe angeordnet ist (und in der die Bauplattform zu Beginn eines/des 3D-Druck-Prozesses angeordnet ist).

Die Baubox kann zum Beispiel antriebsmittelfrei sein. Die Baubox kann zum Beispiel keine aktiven Elemente aufweisen. Die Baubox kann zum Beispiel ohne Antrieb und/oder ohne aktive Elemente ausgebildet sein. Dadurch kann die Baubox zum Beispiel einfach und kostengünstig aufgebaut sein.

Die Baubox kann zum Beispiel eine Heizvorrichtung aufweisen. Die Heizvorrichtung kann zum Beispiel an und/oder in der Bauplattform angeordnet sein. Die Seitenwandstruktur der Baubox kann zum Beispiel aus Keramik, Metall, zum Beispiel Gussmetall, Edelstahl oder Kombinationen davon hergestellt sein. Die Bauplattform kann zum Beispiel einen Metallboden, zum Beispiel Gussmetallboden, oder einen Edelstahlboden oder einen Keramikboden aufweisen. Keramikmaterial hat zum Beispiel eine gute Durchlässigkeit für Mikrowellenstrahlung und ist daher gut für Bauboxen geeignet, die einem Mikrowellen-Post-Prozess zugeführt werden sollen. Die Bauplattform kann zum Beispiel eine Auslassvorrichtung aufweisen, zum Beispiel aufweisend einen gelochten Boden und eine Verschließvorrichtung, um Partikelmaterial aus dem Bauboxinnenraum zu entfernen.

Die Baubox kann zum Beispiel eine Baubox-Entnahmevorrichtung aufweisen, die dazu eingerichtet ist, um die Baubox an die Trägerstruktur anzubringen und/oder von der Trägerstruktur zu entfernen. Die Baubox-Entnahmevorrichtung kann zum Beispiel an der Baubox-Seitenwandstruktur der Baubox angeordnet sein. Die Baubox-Entnahmevorrichtung kann zum Beispiel an der Haltestruktur angeordnet sein, zum Beispiel der Platte, zum Beispiel unter der Platte, zum Beispiel an einer dem Bauboxinnenraum abgewandten Seite der Platte. Die Baubox-Entnahmevorrichtung kann zum Beispiel mindestens eine (zum Beispiel zwei) Staplertasche aufweisen, in die eine Gabel eines Staplers eingreifen kann. Dadurch kann zum Beispiel die Baubox einfach und schnell an der Trägerstruktur angebracht und/oder davon entfernt und/oder gewechselt werden.

Die Trägerstruktur kann zum Beispiel mikrowellenuntauglich ausgebildet sein. Unter einer mikrowellenuntauglichen Trägerstruktur wird eine Trägerstruktur verstanden, die einem Post-Prozess in einer Mikrowelle nicht zugeführt werden kann, zum Beispiel da Teile der Trägerstruktur, wie zum Beispiel der Antrieb, dabei beschädigt bzw. zerstört werden und/oder da Teile der Trägerstruktur aus einem Material gemacht sind, das nicht für eine Mikrowellenbehandlung geeignet ist. Die Baubox kann zum Beispiel mikrowellentauglich ausgebildet sein. Unter einer mikrowellentauglichen Baubox wird eine Baubox verstanden, die einem Post-Prozess in einer Mikrowelle zugeführt werden kann. Zum Beispiel kann eine antriebsfreie Baubox, d.h. eine Baubox ohne Antrieb, mikrowellentauglich sein.

Die Bauplattform kann zum Beispiel einen Boden (zum Beispiel einen der oben genannten Böden) und eine Boden-Abstützstruktur aufweisen, an der der Boden abgestützt ist (zum Beispiel auf der der Boden aufliegt). Der Boden kann zum Beispiel ein oder mehrere (zum Beispiel zwei, zum Beispiel vier) Bodenplatten aufweisen, die zum Beispiel von einer Bodenplatten-Rahmenstruktur umgeben (zum Beispiel eingefasst) sein können. Die Boden-Abstützstruktur kann zum Beispiel eine Waben-förmige Struktur haben. Eine Waben-förmige Struktur ermöglicht zum Beispiel eine gute Durchlässigkeit für Strahlung (zum Beispiel Mikrowellenstrahlung) und ist daher gut für Bauboxen geeignet, die einem (Mikrowellen-)Post-Prozess zugeführt werden sollen. Bodenplatten und/oder Bodenplatten-Rahmenstruktur und/oder Boden-Abstützstruktur können zum Beispiel aus Metall, zum Beispiel Gussmetall, Edelstahl und/oder Keramik hergestellt sein. Die Bauplattform kann zum Beispiel austauschbar bzw. auswechselbar innerhalb der Seitenwandstruktur der Baubox aufgenommen sein. Die Bauplattform kann zum Beispiel aus der Seitenwandstruktur der Baubox entnehmbar sein. An der Bauplattform kann zum Beispiel eine Bauplattform-Entnahmevorrichtung anbringbar sein, die dazu eingerichtet ist, um die Bauplattform aus der Seitenwandstruktur der Baubox zu entnehmen. Die Bauplattform kann zum Beispiel derart ausgebildet sein, dass eine Bauplattform-Entnahmevorrichtung an der Bauplattform anbringbar ist. Die Bauplattform-Entnahmevorrichtung kann zum Beispiel mehrere (zum Beispiel vier) Ringschrauben aufweisen bzw. von diesen zumindest mitausgebildet sein (zum Beispiel ausgebildet sein), die jeweils in ein an der Bauplattform vorgesehenes Gewinde (zum Beispiel Innengewinde) einschraubbar sind.

Das Baubox-System kann zum Beispiel eine oder mehrere weitere Bauboxen aufweisen, die zum Beispiel jeweils gegen die (erste) Baubox austauschbar und an der Trägerstruktur anbringbar sind. Die eine oder mehreren weiteren Bauboxen können zum Beispiel wie oben beschrieben ausgebildet sein. Die eine oder mehreren weiteren Bauboxen können zum Beispiel wie die erste Baubox ausgebildet sein oder von der ersten Baubox verschieden sein.

Das Baubox-System kann zum Beispiel eine oder mehrere weitere Bauplattformen aufweisen, die zum Beispiel jeweils gegen die (erste) Bauplattform austauschbar und in der Seitenwandstruktur der Baubox aufnehmbar sind. Die eine oder mehreren weiteren Bauplattformen können zum Beispiel wie oben beschrieben ausgebildet sein. Die eine oder mehreren weiteren Bauplattformen können zum Beispiel wie die erste Bauplattform ausgebildet sein oder von der ersten Bauplattform verschieden sein.

Das Baubox-System kann zum Beispiel ein Schienensystem oder Rollensystem aufweisen, entlang dem die Trägerstruktur mit daran angebrachter Baubox verfahrbar ist, zum Beispiel mittels des eigenen, in die Trägerstruktur integrierten Fahrantriebs. Das Schienensystem oder Rollensystem kann zum Beispiel wie oben beschrieben ausgebildet sein.

Das Baubox-System kann zum Beispiel eine Steuervorrichtung aufweisen, die zum Beispiel dazu eingerichtet ist, um den Hubantrieb und/oder den Fahrantrieb und/oder die Heizvorrichtung und/oder die Auslassvorrichtung zu steuern. Die Steuervorrichtung kann zum Beispiel eine/die zentrale Steuervorrichtung des 3D-Druckers (erste Steuervorrichtung) und/oder eine/die in die Trägerstruktur integrierte bzw. daran angeordnete Steuervorrichtung (zweite Steuervorrichtung) aufweisen, wobei zum Beispiel die in die Trägerstruktur integrierte bzw. daran angeordnete Steuervorrichtung (zweite Steuervorrichtung) dazu eingerichtet sein kann, um den Hubantrieb und/oder den Fahrantrieb und/oder die Heizvorrichtung und/oder die Auslassvorrichtung zu steuern, wobei zum Beispiel die zentrale Steuervorrichtung (erste Steuervorrichtung) dazu eingerichtet sein kann, um einen Beschichter (zum Beispiel Beschichter zum schichtweisen Auftragen von Partikelmaterial auf die Bauplattform) und/oder einen Druckkopf (zum Beispiel Druckkopf zum selektiven Bedrucken des Partikelmaterials im Binder-Jetting-Verfahren) zu steuern, und wobei zum Beispiel die zentrale Steuervorrichtung (erste Steuervorrichtung) mit der in die Trägerstruktur integrierten Steuervorrichtung (zweite Steuervorrichtung) verbunden sein kann.

Gemäß verschiedenen Aspekten der Erfindung hat ein 3D-Drucker ein Baubox-System, das zum Beispiel wie oben beschrieben ausgebildet sein kann, und einen Beschichter zum schichtweisen Auftragen von Partikelmaterial auf die Bauplattform und/oder einen Druckkopf zum selektiven Bedrucken des Partikelmaterials im Binder-Jetting-Verfahren.

Gemäß verschiedenen Aspekten der Erfindung hat ein 3D-Drucker-System einen 3D-Drucker, der zum Beispiel wie oben beschrieben ausgebildet sein kann, und zum Beispiel ein oder mehrere ausgewählt aus einer Entpackungsstation zum Entpacken der gebauten Bauteile aus der Baubox und einer Mikrowellen-Vorrichtung und/oder einem Ofen, in der/dem die Baubox aufnehmbar ist, zum Härten und/oder Trocknen des in der Baubox angeordneten Bauteils.

Gemäß verschiedenen Aspekten der Erfindung kann das oben beschriebene Baubox-System, der oben beschriebene 3D-Drucker und/oder das oben beschriebene 3D-Drucker-System zum 3D-Drucken von Gießformen und/oder Gießkernen und/oder zum schichtweisen Auftragen von Partikelmaterial auf die Bauplattform und selektiven Bedrucken des Partikelmaterials im Binder-Jetting-Verfahren verwendet werden.

Gemäß verschiedenen Aspekten der Erfindung hat ein 3D-Druck-Verfahren die Schritte:
Bereitstellen eines Baubox-Systems, das zum Beispiel wie oben beschrieben ausgebildet sein kann, wobei die Baubox an der Trägerstruktur angebracht ist,
Aufbauen eines Bauteils im 3D-Druck im Bauboxinnenraum der Baubox,
Entfernen der Baubox von der Trägerstruktur, zum Beispiel automatisiert, sowie
Zuführen der entfernten Baubox einem Post-Prozess, wie zum Beispiel
   Entpacken der gebauten Bauteile aus der entfernten Baubox, zum Beispiel in einer Entpackungsstation, und/oder
   Härten und/oder Trocknen der gebauten Bauteile in der entfernten Baubox, zum Beispiel in einer Mikrowellen-Vorrichtung und/oder einem Ofen, und/oder
Anbringen einer Baubox an der Trägerstruktur, zum Beispiel erneutes Anbringen der gleichen Baubox, nachdem die gebauten Bauteile entpackt wurden, oder Anbringen einer anderen Baubox (Wechseln der Baubox), optional gefolgt von einem erneuten Aufbauen eines Bauteils im 3D-Druck im Bauboxinnenraum der Baubox.

Beispielgebende, aber nicht einschränkende Ausführungsformen der Erfindung sind in den Figuren dargestellt und werden im Folgenden näher erläutert.
Figur 1 zeigt eine Perspektivansicht eines Baubox-Systems für einen 3D-Drucker gemäß einer ersten Ausführungsform.
Figur 2 zeigt die Ansicht aus Figur 1, wobei eine Verkleidungswand weggelassen ist.
Figur 3 zeigt die Ansicht aus Figur 2, wobei die Baubox weggelassen ist. Somit zeigt Figur 3 eine Perspektivansicht der Trägerstruktur des Baubox-Systems für einen 3D-Drucker gemäß der ersten Ausführungsform, wobei eine Verkleidungswand weggelassen ist.
Figur 4 zeigt eine um 180° um eine vertikale Drehachse gedrehte Ansicht der in Figur 3 gezeigten Ansicht der Trägerstruktur, wobei eine Verkleidungswand weggelassen ist.
Figur 5 zeigt die Ansicht aus Figur 4, wobei eine Seitenwand der Trägerstruktur weggelassen ist.
Figur 6 zeigt die Ansicht aus Figur 1, wobei die Trägerstruktur weggelassen ist. Somit zeigt Figur 6 eine Perspektivansicht der Baubox des Baubox-Systems für einen 3D-Drucker gemäß der ersten Ausführungsform.
Figur 7 zeigt die Ansicht aus Figur 6, wobei zwei Seitenwände weggelassen sind.
Figur 8 zeigt die Ansicht aus Figur 7, wobei die Bauplattform weggelassen ist.
Figur 9 zeigt eine Perspektivansicht der Bauplattform der in Figur 6 gezeigten Baubox.
Figur 10 zeigt eine andere Perspektivansicht der in Figur 9 gezeigten Bauplattform.
Figur 11 zeigt eine Perspektivansicht eines Baubox-Systems für einen 3D-Drucker gemäß einer zweiten Ausführungsform.
Figur 12 zeigt eine Perspektivansicht eines Baubox-Systems für einen 3D-Drucker gemäß einer dritten Ausführungsform.
Figur 13 zeigt die Ansicht aus Figur 12, wobei eine Verkleidungswand und die Baubox weggelassen sind. Somit zeigt Figur 13 eine Perspektivansicht der Trägerstruktur des Baubox-Systems für einen 3D-Drucker gemäß der dritten Ausführungsform, wobei eine Verkleidungswand weggelassen ist.
Figur 14 zeigt eine um 180° um eine vertikale Drehachse gedrehte Ansicht der in Figur 13 gezeigten Ansicht der Trägerstruktur, wobei eine Verkleidungswand weggelassen ist
Figur 15 zeigt eine andere Perspektivansicht des in Figur 12 gezeigten Baubox-Systems, wobei eine Seitenwand der Baubox weggelassen ist.
Figur 16 zeigt eine Perspektivansicht einer Baubox für ein Baubox-System für einen 3D-Drucker.
Figur 17 zeigt eine Perspektivansicht einer Bauplattform für eine Baubox für ein Baubox-System für einen 3D-Drucker.
Figur 18 zeigt eine Perspektivansicht einer Bauplattform für eine Baubox für ein Baubox-System für einen 3D-Drucker.
Figur 19 zeigt eine Perspektivansicht eines 3D-Druckers.
Figur 20 zeigt eine andere Perspektivansicht des in Figur 19 gezeigten 3D-Druckers.

In der folgenden Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

Die in den Figuren gezeigten und im Folgenden beschriebenen Trägerstrukturen, Bauboxen und Bauplattformen können beliebig miteinander kombiniert werden.

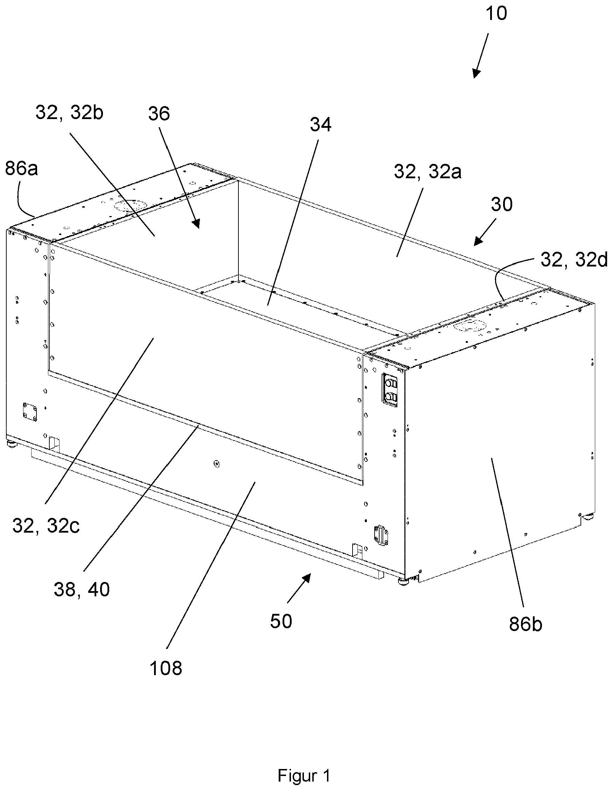

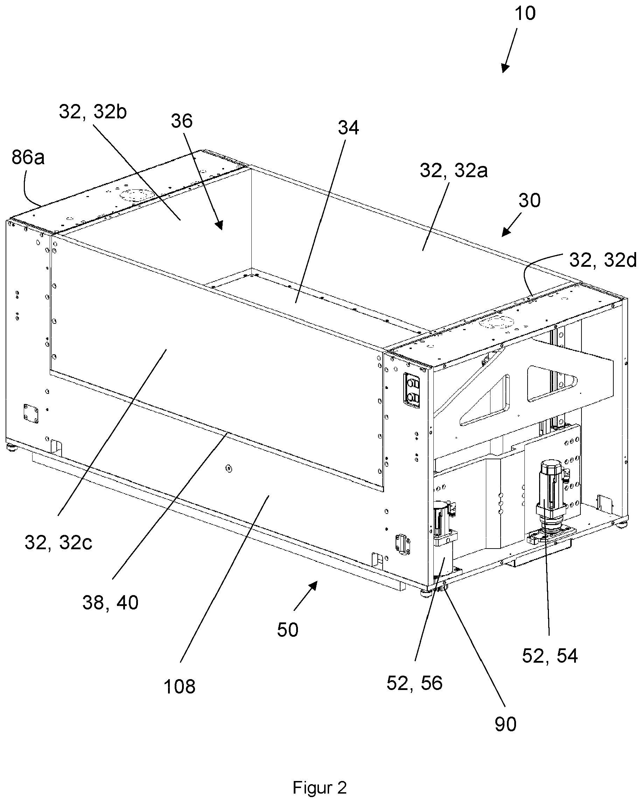

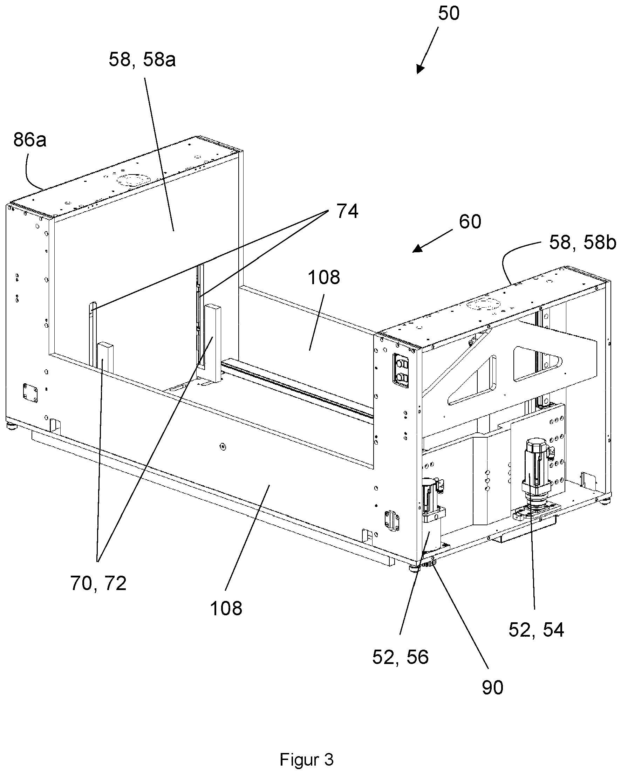

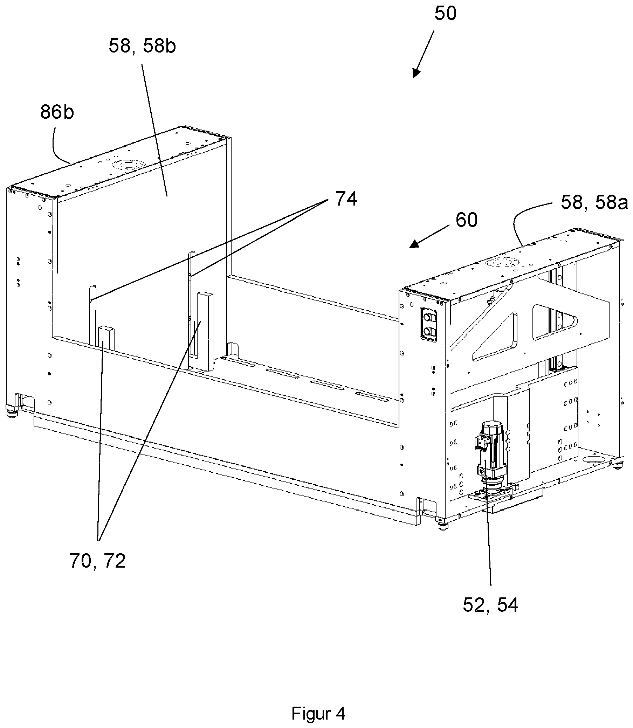

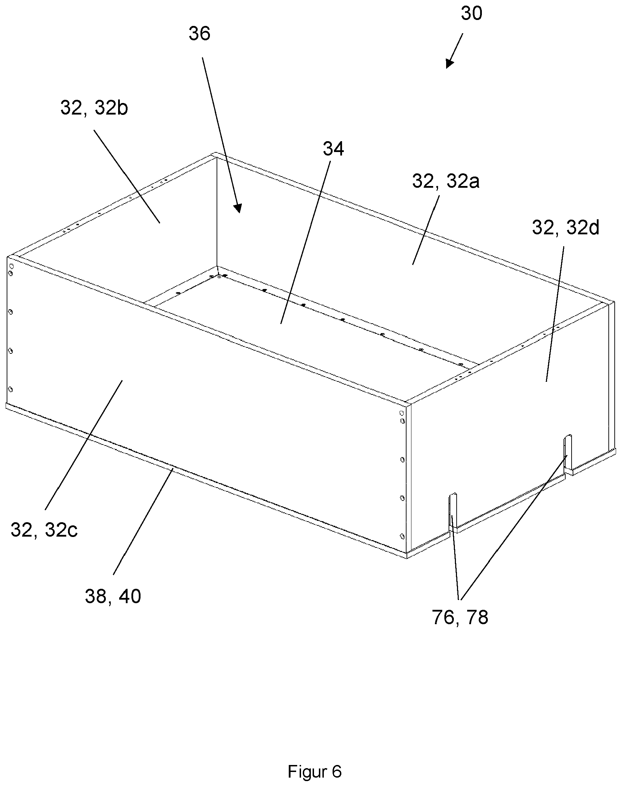

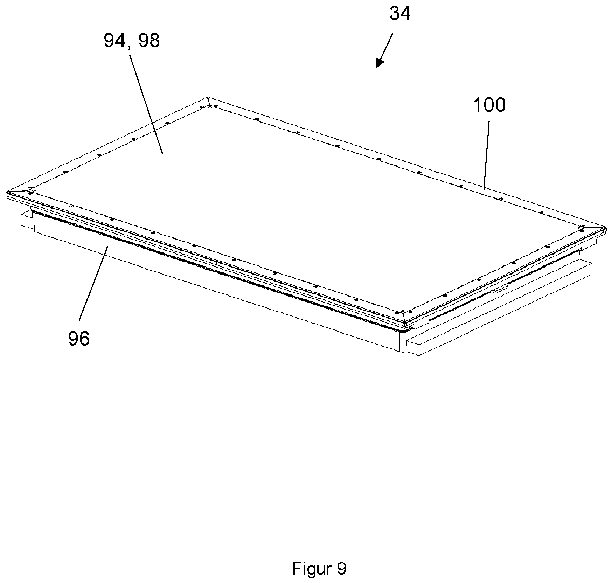

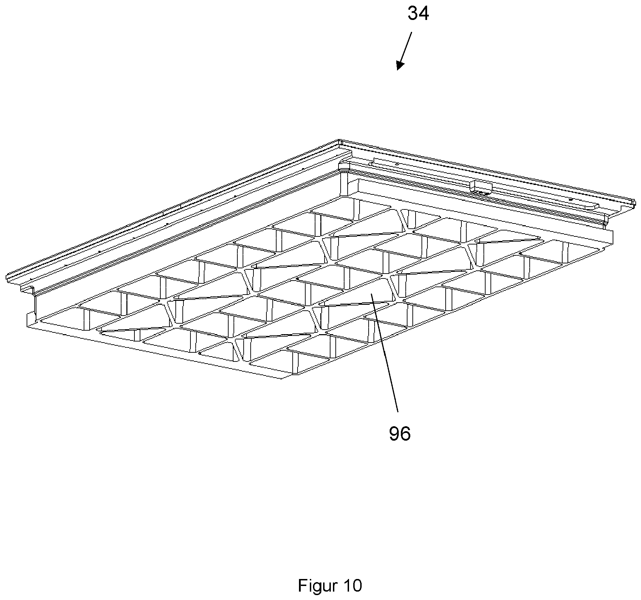

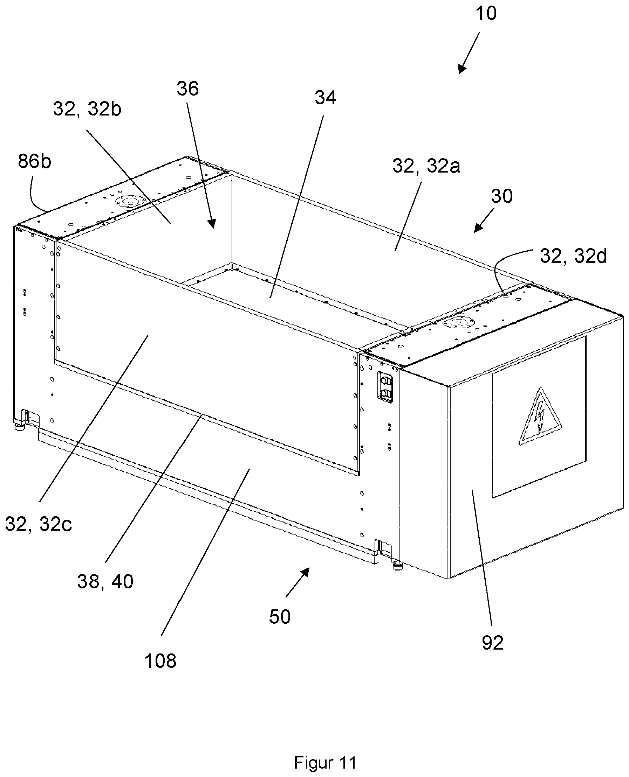

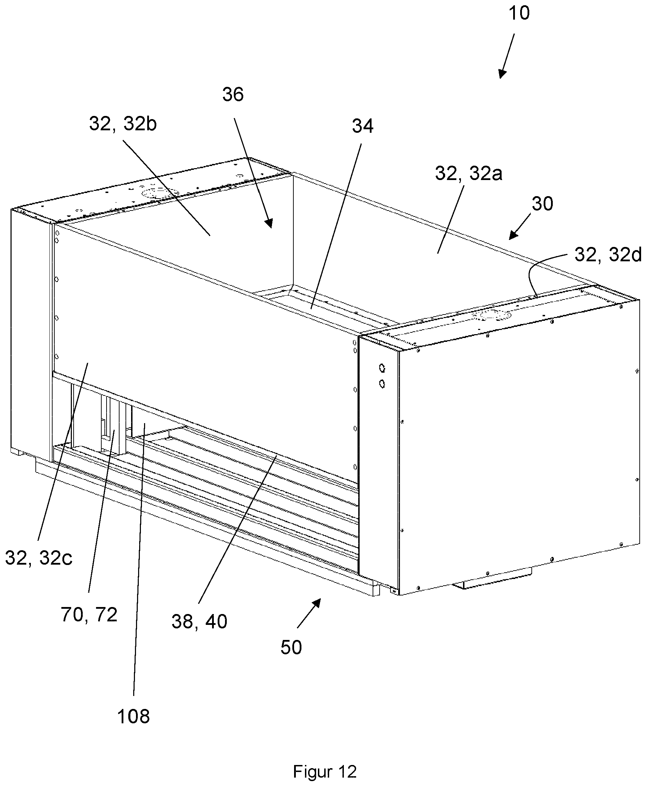

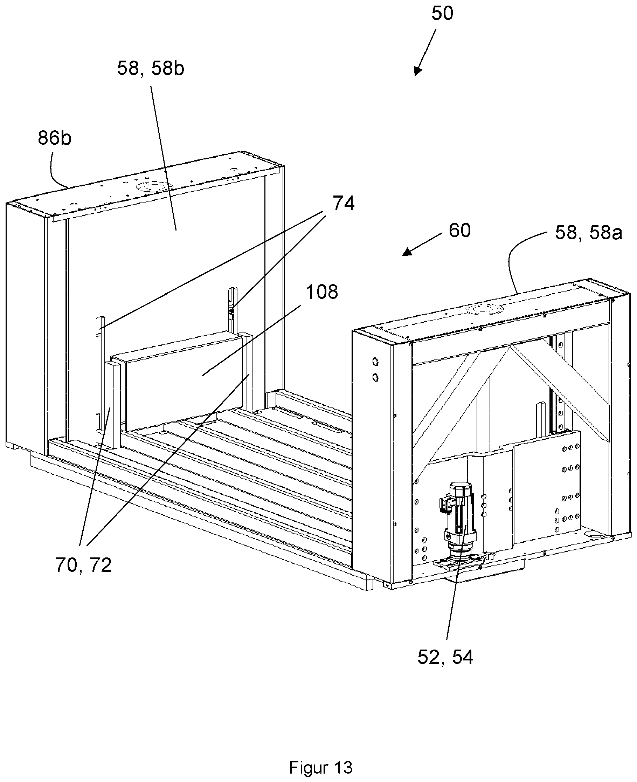

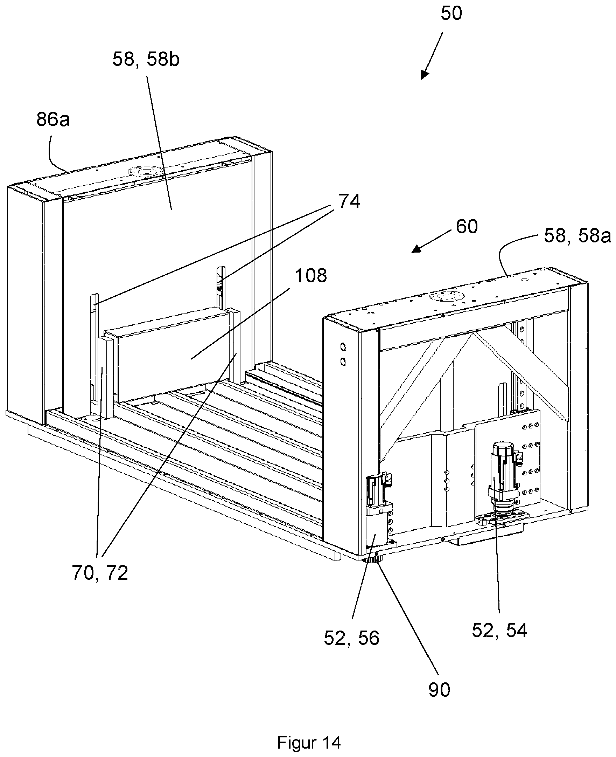

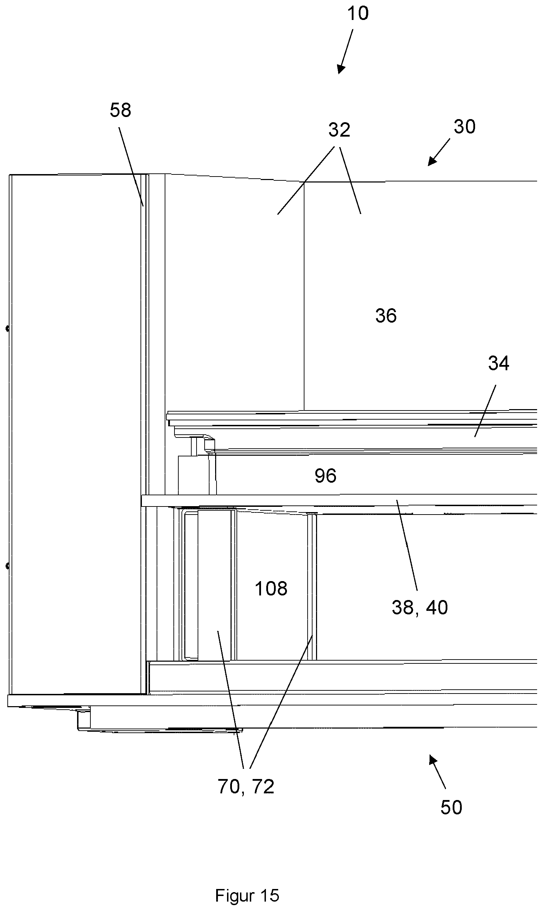

Figuren 1 und 2 zeigen Perspektivansichten eines Baubox-Systems 10 für einen 3D-Drucker 12 gemäß einer ersten Ausführungsform. Figuren 3 bis 5 zeigen Perspektivansichten der Trägerstruktur 50 des Baubox-Systems 10 für einen 3D-Drucker 12 gemäß der ersten Ausführungsform. Figuren 6 bis 8 zeigen Perspektivansichten der Baubox 30 des Baubox-Systems 10 für einen 3D-Drucker 12 gemäß der ersten Ausführungsform. Figuren 9 und 10 zeigen Perspektivansichten der Bauplattform 34 der Baubox 30 des Baubox-Systems 10 für einen 3D-Drucker 12 gemäß der ersten Ausführungsform. Figur 11 zeigt eine Perspektivansichten eines Baubox-Systems 10 für einen 3D-Drucker 12 gemäß einer zweiten Ausführungsform. Figur 12 zeigt eine Perspektivansicht eines Baubox-Systems 10 für einen 3D-Drucker 12 gemäß einer dritten Ausführungsform. Figuren 13 und 14 zeigen Perspektivansichten der Trägerstruktur 50 des Baubox-Systems 10 für einen 3D-Drucker 12 gemäß der dritten Ausführungsform. Figur 15 zeigt eine Perspektivansicht des Baubox-Systems 10 für einen 3D-Drucker 12 gemäß der dritten Ausführungsform.

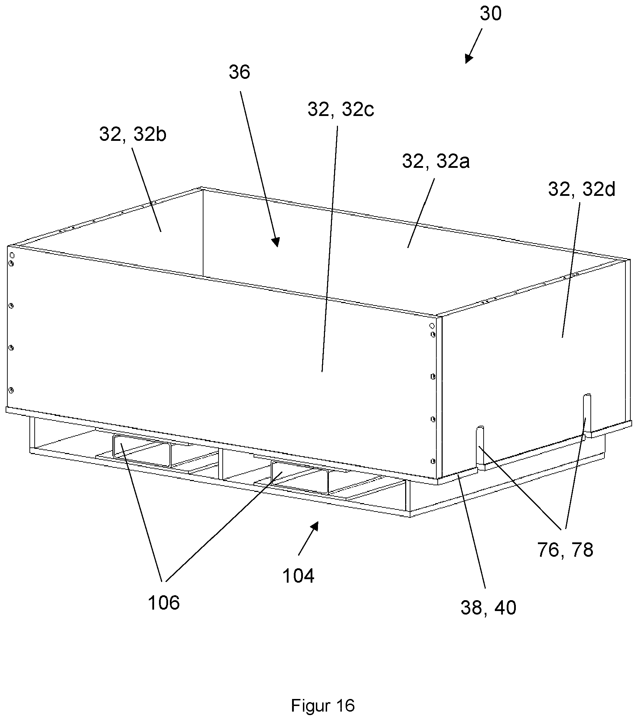

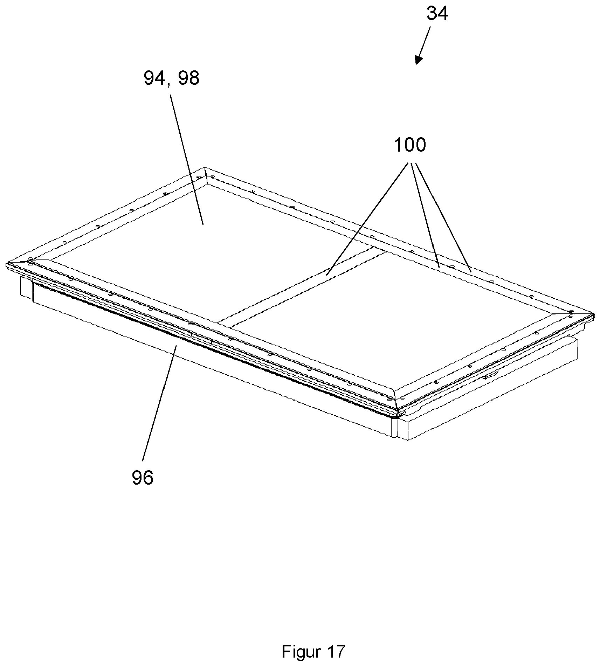

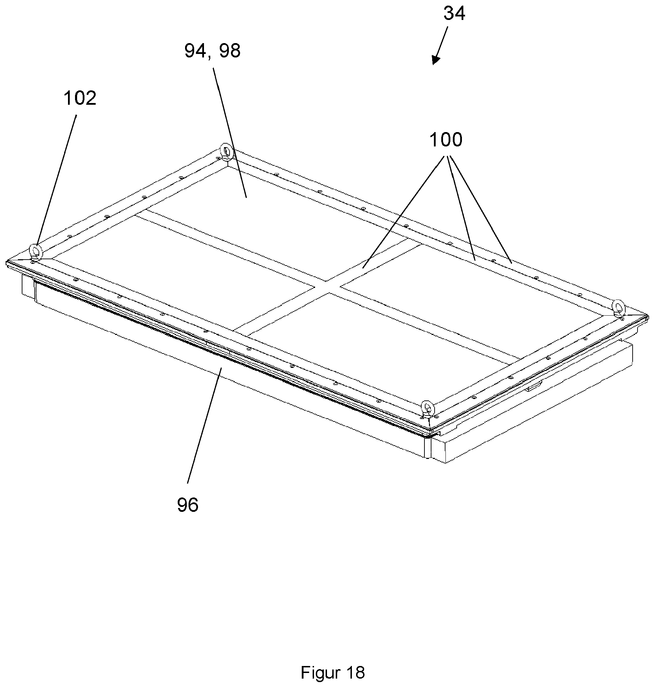

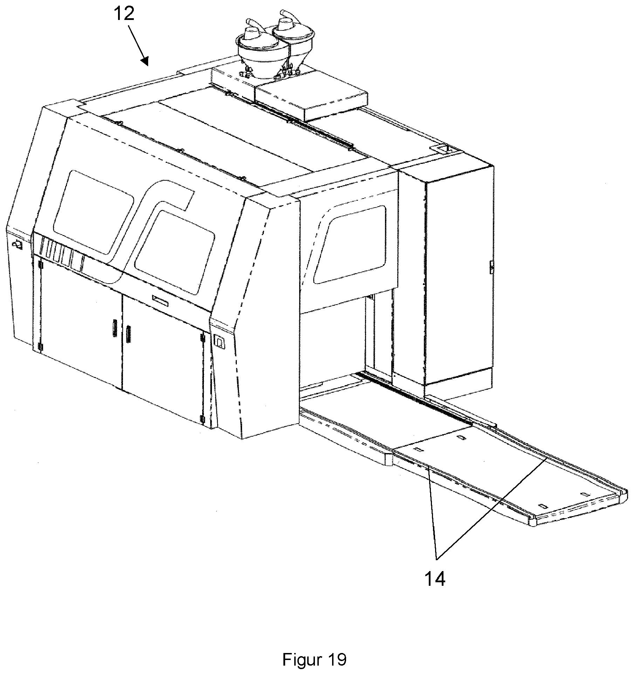

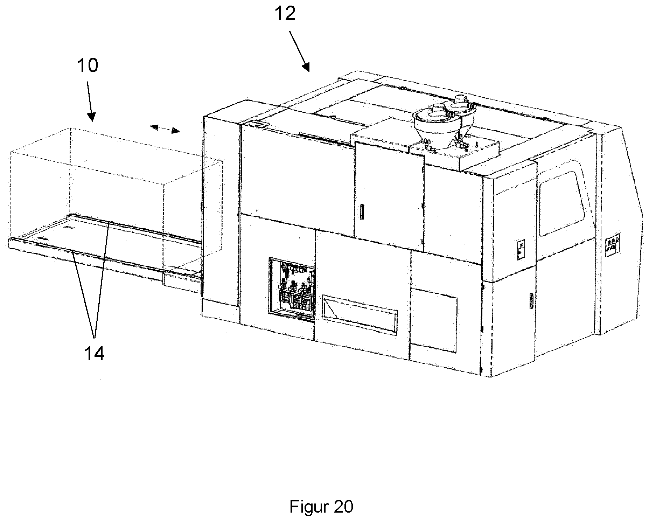

Figur 16 zeigt eine Perspektivansicht einer Baubox 30, die in einem Baubox-System 10 für einen 3D-Drucker 12 verwendet werden kann, zum Beispiel in dem Baubox-System 10 gemäß der dritten Ausführungsform. Figuren 17 und 18 zeigen Perspektivansichten von Bauplattformen 34, die in einer Baubox 30 eines Baubox-Systems 10 für einen 3D-Drucker 12 verwendet werden können, zum Beispiel in einer Baubox 30 eines Baubox-Systems 10 gemäß der ersten, zweiten oder dritten Ausführungsform. Figuren 19 und 20 zeigen Perspektivansichten eines 3D-Druckers.

Wie in den Figuren gezeigt hat ein Baubox-System 10 für einen 3D-Drucker 12 gemäß den Ausführungsformen eine Baubox 30 mit einer Seitenwandstruktur 32 und einer innerhalb der Seitenwandstruktur 32 aufgenommenen Bauplattform 34, wobei die Seitenwandstruktur 32 einen nach oben hin offenen Bauboxinnenraum 36 zum Aufbauen eines Bauteils im 3D-Druck begrenzt, der nach unten hin von der Bauplattform 34 begrenzt ist, und eine Trägerstruktur 50, die einen eigenen, in die Trägerstruktur 50 integrierten Antrieb 52 aufweist und an der die Baubox 30 lösbar anbringbar ist, so dass die Baubox 30 wiederholt nach dem Aufbauen des Bauteils in dem Bauboxinnenraum 36 von der Trägerstruktur 50 entfernt und anschließend wieder an der Trägerstruktur 50 angebracht werden kann.

Wie zum Beispiel in den Figuren 2 bis 5, 13 und 14 gezeigt kann der in die Trägerstruktur 50 integrierte Antrieb 52 zum Beispiel einen Hubantrieb 54 zum Höhenverstellen der Bauplattform 34 aufweisen, der eingerichtet ist, um die Bauplattform 34 der Baubox 30 in der Höhe zu verstellen, wenn die Baubox 30 an der Trägerstruktur 50 angebracht ist.

Der Hubantrieb 54 kann zum Beispiel von zwei miteinander synchronisierten Elektromotoren gebildet sein, die jeweils eine vertikale Antriebsachse aufweisen. Der Hubantrieb 54 (zum Beispiel jeder der beiden Elektromotoren) kann zum Beispiel zum Antreiben eines Spindeltriebs 80 ausgebildet sein. Der/jeder Spindeltriebe 80 kann zum Beispiel eine drehbare Schraubspindel 82 mit einer vertikalen Drehachse und eine Spindelmutter 84 aufweisen. Die Schraubspindel 82 kann zum Beispiel mit dem Hubantrieb 54 verbunden sein, zum Beispiel über einen Riemen oder eine Kette.

Wie zum Beispiel in den Figuren 2, 3 und 14 gezeigt kann der in die Trägerstruktur 50 integrierte Antrieb 52 zum Beispiel einen Fahrantrieb 56 zum Verfahren der Trägerstruktur 50 aufweisen, welcher eingerichtet ist, um das Baubox-System 10 zwischen einer ersten Position, in der das Baubox-System 10 zum Aufbauen des Bauteils in dem 3D-Drucker 12 angeordnet ist, und einer zweiten Position, in der das Baubox-System 10 zum Beispiel außerhalb des 3D-Druckers 12 angeordnet ist, zu verfahren, zum Beispiel entlang einem Schienensystem 14 oder einem Rollensystem, das sich zwischen erster und zweiter Position erstreckt (siehe zum Beispiel Figuren 19 und 20).

Der Fahrantrieb 56 kann zum Beispiel von einem Elektromotor gebildet sein, der eine vertikale Antriebsachse aufweist. Der Fahrantrieb 56 (zum Beispiel der Elektromotor) kann zum Beispiel zum Antreiben eines an der Trägerstruktur 50 befestigten Zahnrads 90 ausgebildet sein. Das Zahnrad 90 kann zum Beispiel mit dem Fahrantrieb 56 verbunden sein. Das Zahnrad 90 kann zum Beispiel an der Unterseite der Trägerstruktur 50 angebracht sein und/oder eine horizontale Radebene aufweisen und/oder ein liegendes Zahnrad sein. Das an der Trägerstruktur 50 befestigte Zahnrad 90 kann zum Beispiel dazu eingerichtet sein, um mit einer Zahnstange zusammenzuwirken, wozu das das Zahnrad 90 zum Beispiel dazu eingerichtet sein kann, um in die Zahnstange einzugreifen und auf der Zahnstange abzurollen, wenn es von dem Fahrantrieb 56 angetrieben wird, so dass das Baubox-System 10 entlang der Zahnstange verfahrbar ist.

Wie zum Beispiel in Figuren 2 bis 5, 13 und 14 gezeigt kann der Hubantrieb 54 und/oder der Spindeltrieb 80 und/oder der Fahrantrieb 56 zum Beispiel in einem Zwischenraum, der zwischen einer Trägerstruktur-Seitenwand 58a, 58b und einer Verkleidungswand 86a, 86b ausgebildet ist, angeordnet sein. Der Hubantrieb 54 und/oder der Spindeltrieb 80 und/oder der Fahrantrieb 56 kann zum Beispiel benachbart zu der Trägerstruktur-Seitenwand 58a, 58b angeordnet sein, zum Beispiel an einer der Baubox 30 abgewandten Seite der Trägerstruktur-Seitenwand 58a, 58b.

Der Hubantrieb 54 und/oder der Fahrantrieb 56 kann zum Beispiel außerhalb der Seitenwandstruktur 32 der Baubox 30 angeordnet sein, wenn die Baubox 30 an der Trägerstruktur 50 angebracht ist, zum Beispiel in der Draufsicht von oben auf das Baubox-System 10 neben der Baubox 30 benachbart zu der Seitenwandstruktur 32 der Baubox 30 und/oder benachbart zu mindestens einer/der Seitenwand 58a, 58b der Trägerstruktur 50, zum Beispiel im Fall einer länglich ausgebildeten Baubox 30 in Längsrichtung vor und/oder hinter der Seitenwandstruktur 32 der Baubox 30 und/oder vor und/oder hinter mindestens einer/der Seitenwand 58a, 58b der Trägerstruktur 50.

Die Trägerstruktur 50 kann zum Beispiel länglich ausgebildet sein und der Hubantrieb 54 und/oder der Fahrantrieb 56 kann zum Beispiel an mindestens einem Längsende der Trägerstruktur 50 angeordnet sein.

Wie zum Beispiel in Figuren 12 und 15 gezeigt, kann die Bauplattform 34 zum Beispiel von ein oder mehreren Stützstrukturen 70, zum Beispiel ein oder mehreren Stützarmen 72, untergriffen sein, die mit dem Hubantrieb 54 in Verbindung stehen und von diesem antreibbar sind, wenn die Baubox 30 an der Trägerstruktur 50 angebracht ist, wobei optional in der Seitenwandstruktur 32 der Baubox 30 und/oder in einer Trägerstruktur-Seitenwandstruktur 58 ein oder mehrere Schlitze 74, 78 ausgebildet sind, durch welche hindurch sich die ein oder mehreren Stützstrukturen 70 erstrecken.

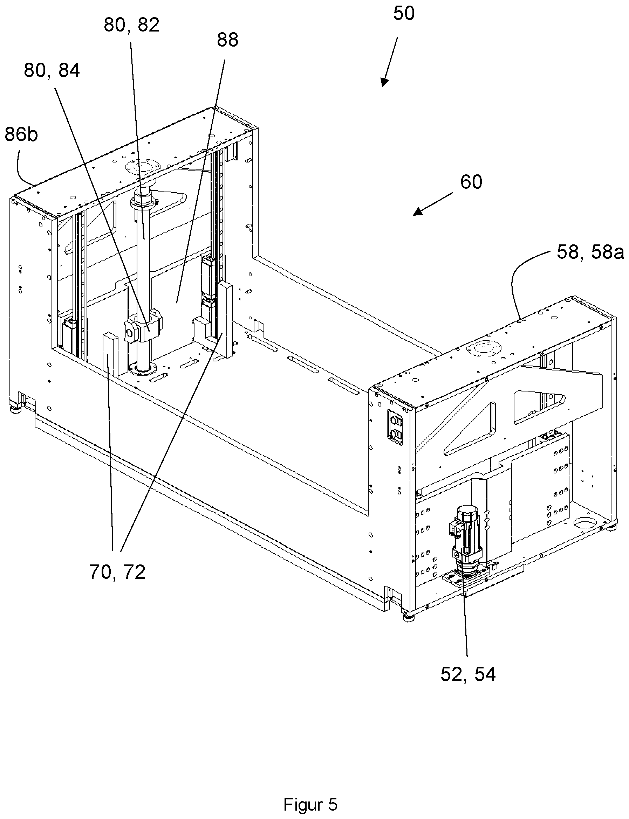

Wie zum Beispiel in Figur 5 gezeigt kann die Stützstruktur 70 zum Beispiel mit der Spindelmutter 84 verbunden sein, zum Beispiel über ein Stützstruktur-Befestigungselement 88, an dem die Stützstruktur 70 befestigt ist und das mit der Spindelmutter 84 verbunden ist.

Die Trägerstruktur 50 kann zum Beispiel eine Trägerstruktur-Seitenwandstruktur 58 aufweisen, welche die Seitenwandstruktur 32 der Baubox 30 in Umfangsrichtung zumindest abschnittsweise umgibt, zum Beispiel an den beiden Stirnseiten einer länglich ausgebildeten Baubox 30 umgibt.

Die Trägerstruktur-Seitenwandstruktur 58 kann die Seitenwandstruktur 32 der Baubox 30 zum Beispiel in Umfangsrichtung unter Ausbildung einer Aussparung 60 abschnittsweise umgeben, wobei die Aussparung 60 zum Beispiel derart dimensioniert ist, dass die Baubox 30 durch die Aussparung 60 seitlich von der Trägerstruktur 50 entfernt und/oder wieder an der Trägerstruktur 50 angebracht werden kann. Die Trägerstruktur-Seitenwandstruktur 58 kann zum Beispiel zwei gegenüberliegende Aussparungen 60 aufweist, welche zum Beispiel jeweils derart dimensioniert sind, dass die Baubox 30 durch die jeweilige Aussparung 60 seitlich von der Trägerstruktur 50 entfernt und/oder wieder an der Trägerstruktur 50 angebracht werden kann. Die mindestens eine Aussparung 60 kann zum Beispiel entlang einer langen Seite der Seitenwandstruktur 32 der Baubox 30 verlaufen.

Wie zum Beispiel in Figuren 1, 2, 11, 12 und 15 gezeigt, kann die Baubox 30 zum Beispiel derart von der Trägerstruktur 50 abgestützt sein, dass ein oberer Rand der Seitenwandstruktur 32 der Baubox 30 mit einem oberen Rand der Trägerstruktur-Seitenwandstruktur 58 im Wesentlichen auf gleicher Höhe angeordnet ist, wenn die Trägerstruktur 50 an der Baubox 30 angeordnet ist.

Die Trägerstruktur 50 kann zum Beispiel mindestens ein Baubox-Abstützelement 108 zum Abstützen der Baubox 30 aufweisen, wenn die Baubox 30 an der Trägerstruktur 50 angeordnet ist. Das Baubox-Abstützelement 108 kann zum Beispiel an der Trägerstruktur-Seitenwandstruktur 58 angeordnet sein. Die Trägerstruktur 50 kann zum Beispiel zwei sich gegenüberliegende Baubox-Abstützelemente 108 aufweisen. Die ein oder mehreren Stützstrukturen 70 können zum Beispiel eine geringere Höhe (zum Beispiel geringere Erstreckung in Vertikalrichtung) als die Baubox-Abstützelemente 108 haben, wenn sich die Stützstrukturen 70 in ihrer untersten Position befinden (siehe zum Beispiel Figuren 13 bis 15).

Die Baubox 30 kann in der Draufsicht zum Beispiel eine Rechteckform haben, mit zwei sich gegenüberliegenden kurzen Baubox-Seitenwänden 32b, 32d und zwei sich gegenüberliegenden langen Baubox-Seitenwänden 32a, 32c.

Wie zum Beispiel in Figuren 6, 8 und 16 gezeigt kann die Baubox 30 zum Beispiel an ein oder mehreren Baubox-Seitenwänden 32a, 32b, 32c, 32d, zum Beispiel an jeder der kurzen Baubox-Seitenwände 32b, 32d, jeweils ein oder mehrere Baubox-Seitenwand-Öffnungen 76 haben, zum Beispiel in der Form ein oder mehrerer Schlitze 78, wobei sich die ein oder mehreren Baubox-Seitenwand-Öffnungen 76 zum Beispiel von einem unteren Rand der Baubox-Seitenwandstruktur 32 aus vertikal in Richtung nach oben erstrecken.

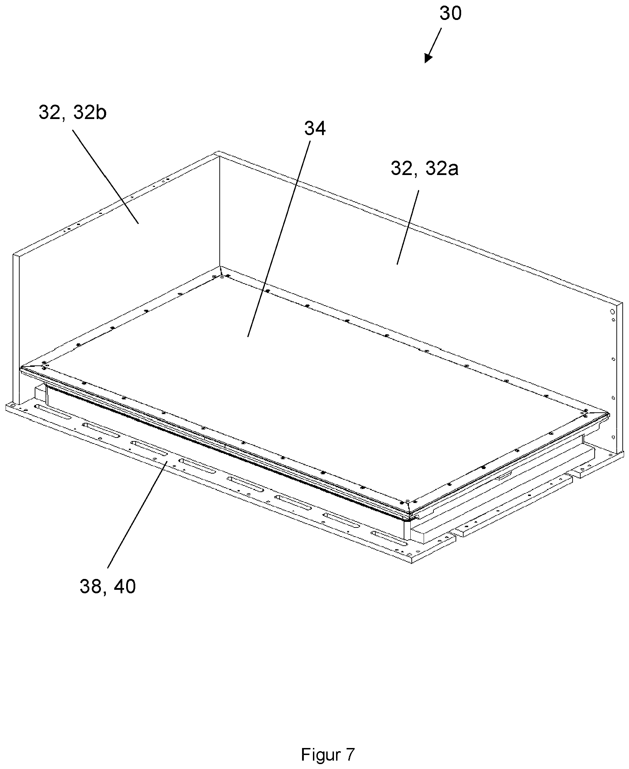

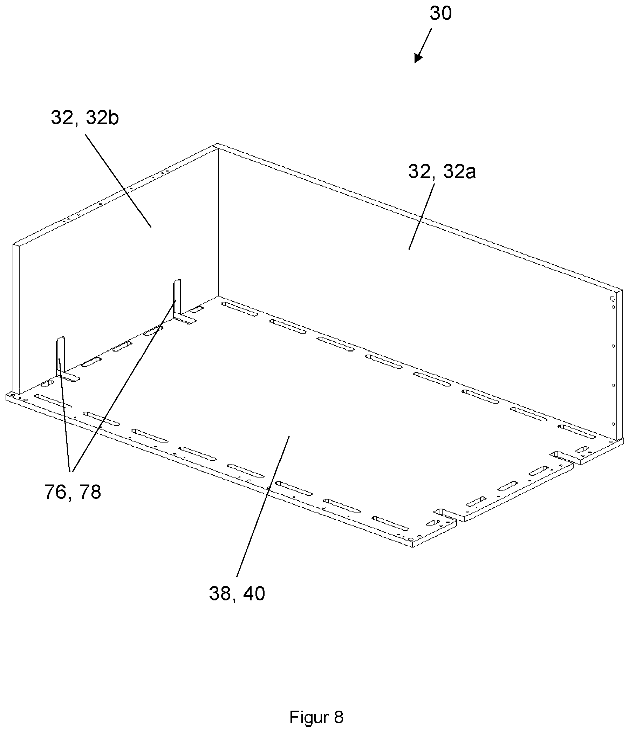

Die Baubox 30 kann zum Beispiel eine Haltestruktur 38 aufweisen, die dazu eingerichtet ist, um die Bauplattform 34 in einer untersten Position in der Baubox 30 zu halten. Wie zum Beispiel in Figuren 6 bis 8 und 16 gezeigt kann die Haltestruktur 38 zum Beispiel eine Platte 40 aufweisen, die an der Baubox-Seitenwandstruktur 32 angeordnet ist. Die Haltestruktur 38 (zum Beispiel die Platte 40) kann zum Beispiel derart ausgebildet sein, dass die Bauplattform 34 (zum Beispiel ein oberer Bereich der Bauplattform 34) in ihrer untersten Position oberhalb der ein oder mehreren Baubox-Seitenwand-Öffnungen 76 angeordnet ist (siehe zum Beispiel Figuren 7 und 8).

Die Baubox 30 kann zum Beispiel eine Baubox-Entnahmevorrichtung 104 aufweisen, die dazu eingerichtet ist, um die Baubox 30 an die Trägerstruktur 50 anzubringen und/oder von der Trägerstruktur 50 zu entfernen. Die Baubox-Entnahmevorrichtung 104 kann zum Beispiel an der Baubox-Seitenwandstruktur 32 der Baubox 30 angeordnet sein. Die Baubox-Entnahmevorrichtung 104 kann zum Beispiel an der Platte 40 angeordnet sein, zum Beispiel unter der Platte 40, zum Beispiel an einer dem Bauboxinnenraum 36 abgewandten Seite der Platte 40. Die Baubox-Entnahmevorrichtung 104 kann zum Beispiel zwei Staplertaschen 106 aufweisen, in welche die Gabel eines Staplers eingreifen kann bzw. die dazu eingerichtet sind, so dass die Gabel eines Staples darin eingreifen kann.

Die Trägerstruktur 50 kann zum Beispiel mikrowellenuntauglich sein und/oder die Baubox 30 kann zum Beispiel mikrowellentauglich sein. Die Baubox 30 kann zum Beispiel antriebsmittelfrei sein und/oder keine aktiven Elemente aufweisen. Die Seitenwandstruktur 32 der Baubox 30 kann zum Beispiel aus Keramik, Metall, zum Beispiel Gussmetall, Edelstahl oder Kombinationen davon hergestellt sein.

Die Bauplattform 34 kann zum Beispiel einen Metallboden, zum Beispiel Gussmetallboden, oder einen Edelstahlboden oder einen Keramikboden aufweisen. An und/oder in der Bauplattform 34 kann zum Beispiel eine Heizvorrichtung angeordnet sein. Die Bauplattform 34 kann zum Beispiel eine Auslassvorrichtung aufweisen, zum Beispiel aufweisend einen gelochten Boden und eine Verschließvorrichtung, um Partikelmaterial aus dem Bauboxinnenraum 36 zu entfernen.

Wie zum Beispiel in Figuren 9, 10, 17 und 18 gezeigt kann die Bauplattform 34 zum Beispiel einen Boden 94 und eine Boden-Abstützstruktur 96 aufweisen, an der der Boden 94 abgestützt ist. Der Boden 94 kann zum Beispiel ein oder mehrere Bodenplatten 98 aufweisen, die zum Beispiel von einer Bodenplatten-Rahmenstruktur 100 eingefasst sein können. Die Boden-Abstützstruktur 96 kann zum Beispiel eine Waben-förmige Struktur haben. Bodenplatten 98 und/oder Bodenplatten-Rahmenstruktur 100 und/oder Boden-Abstützstruktur 96 können zum Beispiel aus Metall, zum Beispiel Gussmetall, Edelstahl und/oder Keramik hergestellt sein. An der Bauplattform 34 kann zum Beispiel eine Bauplattform-Entnahmevorrichtung 102 anbringbar sein, die dazu eingerichtet ist, um die Bauplattform 34 aus der Seitenwandstruktur 32 der Baubox 30 zu entnehmen (zum Beispiel ist in Figur 18 die Bauplattform-Entnahmevorrichtung 102 von vier Ringschrauben ausgebildet, die in ein an der Bauplattform 34 vorgesehenes Gewinde einschraubbar sind; vor einem 3D-Druck-Prozess müssen die Ringschrauben von der Bauplattform 34 entfernt werden).

Das Baubox-System 10 kann zum Beispiel eine oder mehrere weitere Bauboxen 30, die jeweils gegen die erste Baubox 30 austauschbar und an der Trägerstruktur 50 anbringbar sind, aufweisen, wobei die eine oder mehreren weiteren Bauboxen 30 zum Beispiel wie oben beschrieben ausgebildet sein können und/oder von der ersten Baubox 30 verschieden sein können. Das Baubox-System 10 kann zum Beispiel eine oder mehrere weitere Bauplattformen 34, die jeweils gegen die erste Bauplattform 34 austauschbar und in der Seitenwandstruktur 32 der Baubox 30 aufnehmbar sind, aufweisen, wobei die eine oder mehreren weiteren Bauplattformen 34 zum Beispiel wie oben beschrieben ausgebildet sein können und/oder von der ersten Bauplattform 34 verschieden sein können. Das Baubox-System 10 kann zum Beispiel ein Schienensystem 14 oder Rollensystem aufweisen, entlang dem die Trägerstruktur 50 mit daran angebrachter Baubox 30 verfahrbar ist, zum Beispiel mittels des eigenen, in die Trägerstruktur 50 integrierten Fahrantriebs 56.

Das Baubox-System 10 kann zum Beispiel eine Steuervorrichtung aufweisen, die dazu eingerichtet ist, um den Hubantrieb 54 und/oder den Fahrantrieb 56 und/oder die Heizvorrichtung und/oder die Auslassvorrichtung zu steuern. Die Steuervorrichtung kann zum Beispiel in die Trägerstruktur 50 integriert sein und/oder in den 3D-Drucker integriert sein. Wie zum Beispiel in Figur 11 gezeigt kann das Baubox-System 10 zum Beispiel einen Steuerungskasten 92 aufweisen, der an der Trägerstruktur 50 angeordnet ist und in dem die Steuerungsvorrichtung angeordnet ist (in die Trägerstruktur 50 integrierte Steuerungsvorrichtung). Außerdem kann in dem Steuerungskasten 92 zum Bespiel auch mindestens ein Akku angeordnet sein, der den Antrieb der Trägerstruktur mit Strom versorgt.

Ein 3D-Drucker 12 kann zum Beispiel das oben beschriebene Baubox-System 10 aufweisen und ferner einen Beschichter zum schichtweisen Auftragen von Partikelmaterial auf die Bauplattform 34 und/oder einen Druckkopf zum selektiven Bedrucken des Partikelmaterials im Binder-Jetting-Verfahren aufweisen.

Ein 3D-Drucker-System kann zum Beispiel den oben beschriebenen 3D-Drucker 12 aufweisen und ferner eine Entpackungsstation zum Entpacken der gebauten Bauteile aus der Baubox 30 und/oder eine Mikrowellen-Vorrichtung und/oder einen Ofen, in der/dem die Baubox 30 aufnehmbar ist, zum Härten und/oder Trocknen des in der Baubox 30 angeordneten Bauteils aufweisen.

Das oben beschriebene Baubox-System 10, der oben beschriebene 3D-Drucker 12 und/oder das oben beschriebene 3D-Drucker-System können zum Beispiel zum 3D-Drucken von Gießformen und/oder Gießkernen und/oder zum schichtweisen Auftragen von Partikelmaterial auf die Bauplattform 34 und selektiven Bedrucken des Partikelmaterials im Binder-Jetting-Verfahren verwendet werden.

Ein 3D-Druck-Verfahren kann zum Beispiel die folgenden Schritte aufweisen:
(a) Bereitstellen eines/des oben beschriebenen Baubox-Systems 10 für einen 3D-Drucker 12, wobei die Baubox 30 an der Trägerstruktur 50 angebracht ist,
(b) Aufbauen eines Bauteils im 3D-Druck im Bauboxinnenraum 36 der Baubox 30 und
(c) Entfernen der Baubox 30 von der Trägerstruktur 50, zum Beispiel automatisiert, und ferner
(d1) Zuführen der entfernten Baubox 30 einem Post-Prozess, zum Beispiel
   (d1a) Entpacken der gebauten Bauteile aus der entfernten Baubox 30, zum Beispiel in einer Entpackungsstation, und/oder
   (d1b) Härten und/oder Trocknen der gebauten Bauteile in der entfernten Baubox 30, zum Beispiel in einer Mikrowellen-Vorrichtung und/oder einem Ofen, und/oder
(d2) Anbringen einer Baubox 30 an der Trägerstruktur 50, zum Beispiel erneutes Anbringen der gleichen Baubox 30, nachdem die gebauten Bauteile entpackt wurden, oder Anbringen einer anderen Baubox 30, optional gefolgt von einem erneuten Aufbauen eines Bauteils im 3D-Druck im Bauboxinnenraum 36 der Baubox 30.

## Patentansprüche

1. Baubox-System (10) für einen 3D-Drucker (12), aufweisend:
eine Baubox (30) mit einer Seitenwandstruktur (32) und einer innerhalb der Seitenwandstruktur (32) aufgenommenen Bauplattform (34), wobei die Seitenwandstruktur (32) einen nach oben hin offenen Bauboxinnenraum (36) zum Aufbauen eines Bauteils im 3D-Druck begrenzt, der nach unten hin von der Bauplattform (34) begrenzt ist, und
eine Trägerstruktur (50), die einen eigenen, in die Trägerstruktur (50) integrierten Antrieb (52) aufweist und an der die Baubox (30) lösbar anbringbar ist, so dass die Baubox (30) wiederholt nach dem Aufbauen des Bauteils in dem Bauboxinnenraum (36) von der Trägerstruktur (50) entfernt und anschließend wieder an der Trägerstruktur (50) angebracht werden kann,
wobei der in die Trägerstruktur (50) integrierte Antrieb (52) einen Hubantrieb (54) zum Höhenverstellen der Bauplattform (34) aufweist, der eingerichtet ist, um die Bauplattform (34) der Baubox (30) in der Höhe zu verstellen, wenn die Baubox (30) an der Trägerstruktur (50) angebracht ist, **dadurch gekennzeichnet, dass**,
wenn die Baubox (30) an der Trägerstruktur (50) angebracht ist, der Hubantrieb (54) außerhalb der Seitenwandstruktur (32) der Baubox (30) angeordnet ist, in der Draufsicht von oben auf das Baubox-System (10) neben der Baubox (30) benachbart zu der Seitenwandstruktur (32) der Baubox (30) und/oder benachbart zu mindestens einer Seitenwand (58a, 58b) der Trägerstruktur (50).

2. Baubox-System (10) für einen 3D-Drucker (12) nach Anspruch 1,
wobei der in die Trägerstruktur (50) integrierte Antrieb (52) einen Fahrantrieb (56) zum Verfahren der Trägerstruktur (50) aufweist, welcher eingerichtet ist, um das Baubox-System (10) zwischen einer ersten Position, in der das Baubox-System (10) zum Aufbauen des Bauteils in dem 3D-Drucker (12) angeordnet ist, und einer zweiten Position, in der das Baubox-System (10) zum Beispiel außerhalb des 3D-Druckers (12) angeordnet ist, zu verfahren, zum Beispiel entlang einem Schienensystem (14) oder einem Rollensystem, das sich zwischen erster und zweiter Position erstreckt, und/oder
wobei der Hubantrieb im Fall einer länglich ausgebildeten Baubox (30) in Längsrichtung vor und/oder hinter der Seitenwandstruktur (32) der Baubox (30) und/oder vor und/oder hinter mindestens einer Seitenwand (58a, 58b) der Trägerstruktur (50) angeordnet ist.

3. Baubox-System (10) für einen 3D-Drucker (12) nach Anspruch 2, wobei
wenn die Baubox (30) an der Trägerstruktur (50) angebracht ist, der Fahrantrieb (56) außerhalb der Seitenwandstruktur (32) der Baubox (30) angeordnet ist, zum Beispiel in der Draufsicht von oben auf das Baubox-System (10) neben der Baubox (30) benachbart zu der Seitenwandstruktur (32) der Baubox (30) und/oder benachbart zu mindestens einer Seitenwand (58a, 58b) der Trägerstruktur (50), zum Beispiel im Fall einer länglich ausgebildeten Baubox (30) in Längsrichtung vor und/oder hinter der Seitenwandstruktur (32) der Baubox (30) und/oder vor und/oder hinter mindestens einer Seitenwand (58a, 58b) der Trägerstruktur (50), und/oder
die Trägerstruktur (50) länglich ausgebildet ist und der Fahrantrieb (56) an mindestens einem Längsende der Trägerstruktur (50) angeordnet ist, und/oder
die Bauplattform (34) von ein oder mehreren Stützstrukturen (70), zum Beispiel ein oder mehreren Stützarmen (72), untergriffen wird, die mit dem Hubantrieb (54) in Verbindung stehen und von diesem antreibbar sind, wenn die Baubox (30) an der Trägerstruktur (50) angebracht ist, wobei optional in der Seitenwandstruktur (32) der Baubox (30) und/oder in einer Trägerstruktur-Seitenwandstruktur (58) ein oder mehrere Schlitze (74, 78) ausgebildet sind, durch welche hindurch sich die ein oder mehreren Stützstrukturen (70) erstrecken.

4. Baubox-System (10) für einen 3D-Drucker (12) nach einem der Ansprüche 1 bis 3,
wobei die Trägerstruktur (50) eine Trägerstruktur-Seitenwandstruktur (58) aufweist, welche die Seitenwandstruktur (32) der Baubox (30) in Umfangsrichtung zumindest abschnittsweise umgibt, zum Beispiel an den beiden Stirnseiten einer länglich ausgebildeten Baubox (30) umgibt.

5. Baubox-System (10) für einen 3D-Drucker (12) nach Anspruch 4,
wobei die Trägerstruktur-Seitenwandstruktur (58) die Seitenwandstruktur (32) der Baubox (30) in Umfangsrichtung unter Ausbildung einer Aussparung (60) abschnittsweise umgibt, welche Aussparung (60) derart dimensioniert ist, dass die Baubox (30) durch die Aussparung (60) seitlich von der Trägerstruktur (50) entfernt und/oder wieder an der Trägerstruktur (50) angebracht werden kann,
wobei optional die Trägerstruktur-Seitenwandstruktur (58) zwei gegenüberliegende Aussparungen (60) aufweist, welche jeweils derart dimensioniert sind, dass die Baubox (30) durch die jeweilige Aussparung (60) seitlich von der Trägerstruktur (50) entfernt und/oder wieder an der Trägerstruktur (50) angebracht werden kann,
wobei die mindestens eine Aussparung (60) optional entlang einer langen Seite der Seitenwandstruktur (32) der Baubox (30) verläuft.

6. Baubox-System (10) für einen 3D-Drucker (12) nach Anspruch 4 oder 5,
wobei bei an der Trägerstruktur (50) angeordneter Baubox (30) die Baubox (30) derart von der Trägerstruktur (50) abgestützt ist, dass ein oberer Rand der Seitenwandstruktur (32) der Baubox (30) mit einem oberen Rand der Trägerstruktur-Seitenwandstruktur (58) im Wesentlichen auf gleicher Höhe angeordnet ist.

7. Baubox-System (10) für einen 3D-Drucker (12) nach einem der vorangehenden Ansprüche,
wobei die Baubox (30) in der Draufsicht eine Rechteckform hat, mit zwei sich gegenüberliegenden kurzen Baubox-Seitenwänden (32b, 32d) und zwei sich gegenüberliegenden langen Baubox-Seitenwänden (32a, 32c), und
wobei optional die Baubox (30) an ein oder mehreren Baubox-Seitenwänden (32a, 32b, 32c, 32d), zum Beispiel an jeder der kurzen Baubox-Seitenwände (32b, 32d), jeweils ein oder mehrere Baubox-Seitenwand-Öffnungen (76) hat, zum Beispiel in der Form ein oder mehrerer Schlitze (78), wobei sich die ein oder mehreren Baubox-Seitenwand-Öffnungen (76) zum Beispiel von einem unteren Rand der Baubox-Seitenwandstruktur (32) aus vertikal in Richtung nach oben erstrecken.

8. Baubox-System (10) für einen 3D-Drucker (12) nach einem der vorangehenden Ansprüche,
wobei die Baubox (30) eine Haltestruktur (38) aufweist, die dazu eingerichtet ist, um die Bauplattform (34) in einer untersten Position in der Baubox (30) zu halten,
wobei die Haltestruktur (38) zum Beispiel eine Platte (40) aufweist, die an der Baubox-Seitenwandstruktur (32) angeordnet ist, und/oder wobei die Haltestruktur (38) zum Beispiel derart ausgebildet ist, dass die Bauplattform (34) in ihrer untersten Position oberhalb der ein oder mehreren Baubox-Seitenwand-Öffnungen (76) aus Anspruch 7 angeordnet ist.

9. Baubox-System (10) für einen 3D-Drucker (12) nach einem der vorangehenden Ansprüche,
wobei die Seitenwandstruktur (32) der Baubox (30) aus Keramik, Metall, zum Beispiel Gussmetall, Edelstahl oder Kombinationen davon hergestellt ist, und/oder
wobei die Bauplattform (34) einen Metallboden, zum Beispiel Gussmetallboden, oder einen Edelstahlboden oder einen Keramikboden aufweist, und/oder
wobei an und/oder in der Bauplattform (34) eine Heizvorrichtung angeordnet ist, und/oder
wobei die Bauplattform (34) eine Auslassvorrichtung aufweist, zum Beispiel aufweisend einen gelochten Boden und eine Verschließvorrichtung, um Partikelmaterial aus dem Bauboxinnenraum (36) zu entfernen, und/oder
wobei die Trägerstruktur (50) mikrowellenuntauglich und/oder die Baubox (30) mikrowellentauglich ausgebildet ist, und/oder
wobei die Baubox (30) antriebsmittelfrei ist und/oder keine aktiven Elemente aufweist.

10. Baubox-System (10) für einen 3D-Drucker (12) nach einem der vorangehenden Ansprüche, ferner aufweisend
eine oder mehrere weitere Bauboxen (30), die jeweils gegen die Baubox (30) austauschbar und an der Trägerstruktur (50) anbringbar sind, wobei die eine oder mehreren weiteren Bauboxen (30) zum Beispiel wie in einem der vorangehenden Ansprüche beschrieben ausgebildet sind und/oder von der ersten Baubox (30) verschieden sind, und/oder
eine oder mehrere weitere Bauplattformen (34), die jeweils gegen die Bauplattform (34) austauschbar und in der Seitenwandstruktur (32) der Baubox (30) aufnehmbar sind, wobei die eine oder mehreren weiteren Bauplattformen (34) zum Beispiel wie in Anspruch 9 beschrieben ausgebildet sind und/oder von der ersten Bauplattform (34) verschieden sind, und/oder
ein Schienensystem (14) oder Rollensystem, entlang dem die Trägerstruktur (50) mit daran angebrachter Baubox (30) verfahrbar ist, zum Beispiel mittels des eigenen, in die Trägerstruktur (50) integrierten Fahrantriebs (56) nach Anspruch 2, und/oder
eine Steuervorrichtung, die dazu eingerichtet ist, um den Hubantrieb (54) und/oder den Fahrantrieb (56) und/oder die Heizvorrichtung und/oder die Auslassvorrichtung zu steuern.

11. Baubox-System (10) für einen 3D-Drucker (12), aufweisend:
eine Baubox (30) mit einer Seitenwandstruktur (32) und einer innerhalb der Seitenwandstruktur (32) aufgenommenen Bauplattform (34), wobei die Seitenwandstruktur (32) einen nach oben hin offenen Bauboxinnenraum (36) zum Aufbauen eines Bauteils im 3D-Druck begrenzt, der nach unten hin von der Bauplattform (34) begrenzt ist, und
eine Trägerstruktur (50), die einen eigenen, in die Trägerstruktur (50) integrierten Antrieb (52) aufweist und an der die Baubox (30) lösbar anbringbar ist, so dass die Baubox (30) wiederholt nach dem Aufbauen des Bauteils in dem Bauboxinnenraum (36) von der Trägerstruktur (50) entfernt und anschließend wieder an der Trägerstruktur (50) angebracht werden kann,
wobei die Baubox (30) in der Draufsicht eine Rechteckform hat, mit zwei sich gegenüberliegenden kurzen Baubox-Seitenwänden (32b, 32d) und zwei sich gegenüberliegenden langen Baubox-Seitenwänden (32a, 32c),
**dadurch gekennzeichnet, dass** die Baubox (30) an ein oder mehreren Baubox-Seitenwänden (32a, 32b, 32c, 32d), zum Beispiel an jeder von zwei sich gegenüberliegenden kurzen Baubox-Seitenwänden (32b, 32d), jeweils ein oder mehrere Baubox-Seitenwand-Öffnungen (76) hat, zum Beispiel in der Form ein oder mehrerer Schlitze (78), wobei sich die ein oder mehreren Baubox-Seitenwand-Öffnungen (76) zum Beispiel von einem unteren Rand der Baubox-Seitenwandstruktur (32) aus vertikal in Richtung nach oben erstrecken.

12. 3D-Drucker (12), aufweisend ein Baubox-System (10) nach einem der Ansprüche 1-11, ferner aufweisend einen Beschichter zum schichtweisen Auftragen von Partikelmaterial auf die Bauplattform (34) und/oder einen Druckkopf zum selektiven Bedrucken des Partikelmaterials im Binder-Jetting-Verfahren.

13. 3D-Drucker-System, aufweisend einen 3D-Drucker (12) nach Anspruch 12 und ein oder mehrere ausgewählt aus:
einer Entpackungsstation zum Entpacken der gebauten Bauteile aus der Baubox (30),
einer Mikrowellen-Vorrichtung und/oder einem Ofen, in der/dem die Baubox (30) aufnehmbar ist, zum Härten und/oder Trocknen des in der Baubox (30) angeordneten Bauteils.

14. Verwendung des Baubox-Systems (10) nach einem der Ansprüche 1-11, des 3D-Druckers (12) nach Anspruch 12 oder des 3D-Drucker-Systems nach Anspruch 13
zum 3D-Drucken von Gießformen und/oder Gießkernen und/oder
zum schichtweisen Auftragen von Partikelmaterial auf die Bauplattform (34) und selektiven Bedrucken des Partikelmaterials im Binder-Jetting-Verfahren.

15. 3D-Druck-Verfahren, aufweisend:
Bereitstellen eines Baubox-Systems (10) für einen 3D-Drucker (12) nach einem der Ansprüche 1-11, wobei die Baubox (30) an der Trägerstruktur (50) angebracht ist,
Aufbauen eines Bauteils im 3D-Druck im Bauboxinnenraum (36) der Baubox (30) und
Entfernen der Baubox (30) von der Trägerstruktur (50), zum Beispiel automatisiert,
ferner aufweisend:
Zuführen der entfernten Baubox (30) einem Post-Prozess, zum Beispiel
Entpacken der gebauten Bauteile aus der entfernten Baubox (30), zum Beispiel in einer Entpackungsstation, und/oder
Härten und/oder Trocknen der gebauten Bauteile in der entfernten Baubox (30), zum Beispiel in einer Mikrowellen-Vorrichtung und/oder einem Ofen, und/oder
Anbringen einer Baubox (30) an der Trägerstruktur (50), zum Beispiel erneutes Anbringen der gleichen Baubox (30), nachdem die gebauten Bauteile entpackt wurden, oder Anbringen einer anderen Baubox (30), optional gefolgt von einem erneuten Aufbauen eines Bauteils im 3D-Druck im Bauboxinnenraum (36) der Baubox (30).

## Claims

1. A build box system (10) for a 3D printer (12), comprising:
a build box (30) having a sidewall structure (32) and a build platform (34) received within the sidewall structure (32), wherein the sidewall structure (32) defines an upwardly open build box interior (36) for building a component in 3D printing, the build box interior (36) being downwardly defined by the build platform (34); and
a support structure (50), comprising its own drive (52), integrated into the support structure (50), and to which the build box (30) can be detachably attached, so that the build box (30) can be repeatedly removed from the support structure (50) after the construction of the component in the build box interior (36) and subsequently reattached to the support structure (50),
wherein the drive (52) that is integrated into the support structure (50) comprises a lifting drive (54) for adjusting the height of the build platform (34), which is configured to change the height of the build platform (34) of the build box (30) when the build box (30) is attached to the support structure (50), **characterized in that**,
when the build box (30) is attached to the support structure (50), the lifting drive (54) is arranged outside the sidewall structure (32) of the build box (30), in a top view of the build box system (10) next to the build box (30), adjacent to the sidewall structure (32) of the build box (30) and/or adjacent to at least one sidewall (58a, 58b) of the support structure (50).

2. The build box system (10) for a 3D printer (12) according to claim 1,
wherein the drive (52) that is integrated into the support structure (50) comprises a drive (56) for moving the support structure (50), which is configured to move the build box system (10) between a first position, in which the build box system (10) is configured for building the component in the 3D printer (12), and a second position, in which the build box system (10) is configured for example outside the 3D printer (12), for example along a rail system (14) or a roller system extending between the first and second position, and/or
wherein the lifting drive in the case of an elongated build box (30) is arranged in the longitudinal direction in front of and/or behind the sidewall structure (32) of the build box (30) and/or in front of and/or behind at least one sidewall (58a, 58b) of the support structure (50).

3. The build box system (10) for a 3D printer (12) of claim 2,
wherein when the build box (30) is attached to the support structure (50), the drive (56) is arranged outside the sidewall structure (32) of the build box (30), for example in the top view of the build box system (10) next to the build box (30) adjacent to the sidewall structure (32) of the build box (30) and/or adjacent to at least one sidewall (58a, 58b) of the support structure (50), for example in the case of an elongated build box (30) in longitudinal direction in front of and/or behind the sidewall structure (32) of the build box (30) and/or in front of and/or behind at least one sidewall (58a, 58b) of the support structure (50), and/or
the support structure (50) is elongated and the traction drive (56) is arranged at at least one longitudinal end of the support structure (50), and/or
the build platform (34) is undergirded by one or more support structures (70), for example one or more support arms (72), which are in communication with and drivable by the lifting drive (54) when the build box (30) is attached to the support structure (50), wherein optionally one or more slots (74, 78) are formed in the sidewall structure (32) of the build box (30), and/or in a support structure side wall structure (58), through which slots the one or more support structures (70) extend.

4. A build box system (10) for a 3D printer (12) according to any one of claims 1 to 3,
wherein the support structure (50) comprises a carrier structure sidewall structure (58) which surrounds the sidewall structure (32) of the build box (30) in the circumferential direction at least in sections, for example at the two end faces of an inwardly formed build box (30).

5. A build box system (10) for a 3D printer (12) according to claim 4,
wherein the support structure sidewall structure (58) sectionally surrounds the sidewall structure (32) of the build box (30) circumferentially to form a recess (60), the recess (60) being dimensioned such that the build box (30) can be laterally removed from the support structure (50) through the recess and/or reattached to the support structure (50) through the recess (60),
wherein optionally the support structure sidewall structure (58) has two opposing recesses (60), each dimensioned such that the build box (30) can be laterally removed from and/or reattached to the support structure (50) through the respective recess (60),
wherein the at least one recess (60) optionally extends along a long side of the sidewall structure (32) of the build box (30).

6. A build box system (10) for a 3D printer (12) according to claim 4 or 5,
wherein, with the build box (30) disposed on the support structure (50), the build box is (30) is supported by the support structure (50) such that an upper edge of the sidewall structure (32) of the build box (30) is substantially level with an upper edge of the support structure-sidewall structure (58).

7. A build box system (10) for a 3D printer (12) according to any one of the preceding claims,
wherein the build box (30) has a rectangular shape in plan view, with two opposing short build box sidewalls (32b, 32d) and two opposing long build box sidewalls (32a, 32c), and
wherein optionally the build box (30) has one or more build box sidewall openings (76) on one or more build box sidewalls (32a, 32b, 32c, 32d), for example on each of the short build box sidewalls (32b, 32d), for example in the form of one or more slots (78), the one or more build box sidewall openings (76) extending vertically upwardly from, for example, a lower edge of the build box sidewall structure (32).

8. A build box system (10) for a 3D printer (12) according to any one of the preceding claims,
wherein the build box (30) includes a retaining structure (38) configured to retain the build platform (34) in a lowermost position in the build box (30),
wherein the support structure (38) comprises, for example, a plate (40) disposed on the build box sidewall structure (32), and/or wherein the support structure (38) is configured, for example, such that the build platform (34) is disposed in its lowermost position above the one or more build box sidewall openings (76) of claim 7.

9. A build box system (10) for a 3D printer (12) according to any one of the preceding claims,
wherein the sidewall structure (32) of the build box (30) is made of ceramic, metal, for example cast metal, stainless steel, or combinations thereof, and/or
wherein the build platform (34) comprises a metal bottom, for example a cast metal bottom, or a stainless steel bottom or a ceramic bottom, and/or
wherein a heating device is arranged on and/or in the build platform (34), and/or
wherein the build platform (34) comprises an outlet device, for example comprising a perforated bottom and a closure device, for removing particulate material from the build box interior (36), and/or
wherein the support structure (50) is designed to be microwave-incapable and/or the build box (30) is designed to be microwave-incapable, and/or
wherein the build box (30) is free of driving means and/or has no active elements.

10. A build box system (10) for a 3D printer (12) according to any of the preceding claims, further comprising:
one or more further build boxes (30), each of which is interchangeable with the build box (30) and attachable to the support structure (50), wherein the one or more further build boxes (30) are formed, for example, as described in one of the preceding claims and/or are different from the first build box (30), and/or
one or more further build platforms (34) each interchangeable with the build platform (34) and receivable in the sidewall structure (32) of the building box (30), wherein the one or more further build platforms (34) are, for example, formed as described in claim 9 and/or are different from the first build platform (34), and/or
a rail system (14) or roller system along which the carrier structure (50) with a build box (30) attached thereto is movable, for example by means of its own traction drive (56) integrated in the support structure (50) according to claim 2,
and/or
a control device which is arranged to control the lifting drive (54) and/or to control the traction drive (56) and/or the heating device and/or the outlet device.

11. A build box system (10) for a 3D printer (12), comprising:
a build box (30) having a sidewall structure (32) and a build platform (34) received within the sidewall structure (32), the sidewall structure (32) defining an upwardly open build box interior (36) for building a component in 3D printing, the build box interior (36) being downwardly bounded by the build platform (34); and
a support structure (50) which has its own drive (52) integrated into the support structure (50) and to which the build box (30) can be detachably attached, so that the build box (30) can be repeatedly removed from the support structure (50) after the construction of the component in the interior (36) of the build box and then returned to the support structure (50),
wherein the build box (30) has a rectangular shape in plan view, with two opposing short build box sidewalls (32b, 32d) and two opposing long build box sidewalls (32a, 32c), **characterized in that**
the build box (30) at one or more build box sidewalls (32a, 32b,
32c, 32d), for example at each of two opposing short build box sidewalls (32b, 32d), each having one or more build box sidewall openings (76), for example in the form of one or more slots (78), the one or more build box sidewall openings (76) extending vertically upwardly from a lower edge of the build box sidewall structure (32), for example.

12. A 3D printer (12) comprising a build box system (10) according to one of the Claims 1-11, further comprising a coater for applying particulate material to the build platform (34) layer-by-layer and/or a printhead for selectively printing the particulate material using a binder jetting process.

13. A 3D printer system comprising a 3D printer (12) according to claim 12 and one or more selected from:
an unpacking station for unpacking the built components from the build box (30),
a microwave device and/or
an oven, in which the build box (30) can be accommodated, for hardening and/or drying the component arranged in the build box (30).

14. Use of the build box system (10) according to any one of claims 1-11, the 3D printer (12) according to claim 12, or the 3D printer system according to claim 13 for 3D printing of casting molds and/or casting cores and/or
for layer-by-layer application of particulate material to the build platform (34) and selective printing of the particulate material using the binder jetting process.

15. A 3D printing process, comprising:
providing a build box system (10) for a 3D printer (12) according to any one of claims 1-11, wherein the build box (30) is attached to the support structure (50), building a component in 3D printing in the interior (36) of the build box (30) and removing the build box (30) from the support structure (50), for example automatically, further comprising:
feeding the removed build box (30) to a post process, for example unpacking the built components from the removed build box (30), to the example in an unpacking station, and/or
curing and/or drying the built components in the removed build box (30), for example in a microwave device and/or an oven, and/or
attaching a build box (30) to the support structure (50), for example reattaching the same build box (30) after the built components have been unpacked, or attaching a different build box (30), optionally followed by rebuilding a component in 3D printing in the build box interior (36) of the build box (30).

## Revendications

1. Système de boîte de construction (10) pour une imprimante 3D (12), comprenant :
une boîte de construction (30) avec une structure de paroi latérale (32) et une plate-forme de construction (34) reçue à l'intérieur de la structure de paroi latérale (32), dans lequel la structure de paroi latérale (32) délimite un espace intérieur de boîte de construction (36) ouvert vers le haut pour la construction d'un composant par impression 3D, qui est délimité vers le bas par la plate-forme de construction (34), et
une structure de support (50) qui comprend son propre entraînement (52) intégré dans la structure de support (50) et sur laquelle la boîte de construction (30) peut être montée de manière amovible, de sorte que la boîte de construction (30) peut être retirée de la structure de support (50) à plusieurs reprises après la construction du composant dans l'espace intérieur de boîte de construction (36) et ensuite montée à nouveau sur la structure de support (50),
dans lequel l'entraînement (52) intégré dans la structure de support (50) comprend un entraînement de levage (54) pour le réglage en hauteur de la plate-forme de construction (34), qui est conçu pour régler en hauteur la plate-forme de construction (34) de la boîte de construction (30) lorsque la boîte de construction (30) est montée sur la structure de support (50), **caractérisé en ce que**, lorsque la boîte de construction (30) est montée sur la structure de support (50), l'entraînement de levage (54) est disposé à l'extérieur de la structure de paroi latérale (32) de la boîte de construction (30), à côté de la boîte de construction (30) de manière adjacente à la structure de paroi latérale (32) de la boîte de construction (30) et/ou de manière adjacente à au moins une paroi latérale (58a, 58b) de la structure de support (50) dans la vue du dessus du système de boîte de construction (10).

2. Système de boîte de construction (10) pour une imprimante 3D (12) selon la revendication 1,
dans lequel l'entraînement (52) intégré dans la structure de support (50) comprend un entraînement de déplacement (56) pour déplacer la structure de support (50), lequel est conçu pour déplacer le système de boîte de construction (10) entre une première position, dans laquelle le système de boîte de construction (10) est disposé dans l'imprimante 3D (12) pour assembler le composant, et une deuxième position, dans laquelle le système de boîte de construction (10) est disposé par exemple à l'extérieur de l'imprimante 3D (12) par exemple le long d'un système de rails (14) ou d'un système de rouleaux qui s'étend entre la première et la deuxième position, et/ou
dans lequel dans le cas d'une boîte de construction (30) réalisée de manière allongée, l'entraînement de levage est disposé dans la direction longitudinale devant et/ou derrière la structure de paroi latérale (32) de la boîte de construction (30) et/ou devant et/ou derrière au moins une paroi latérale (58a, 58b) de la structure de support (50).

3. Système de boîte de construction (10) pour une imprimante 3D (12) selon la revendication 2, dans lequel
lorsque la boîte de construction (30) est montée sur la structure de support (50), l'entraînement de déplacement (56) est disposé à l'extérieur de la structure de paroi latérale (32) de la boîte de construction (30), par exemple, dans la vue du dessus du système de boîte de construction (10), à côté de la boîte de construction (30), de manière adjacente à la structure de paroi latérale (32) de la boîte de construction (30) et/ou de manière adjacente à au moins une paroi latérale (58a, 58b) de la structure de support (50), par exemple dans le cas d'une boîte de construction (30) réalisée de manière allongée, dans la direction longitudinale devant et/ou derrière la structure de paroi latérale (32) de la boîte de construction (30) et/ou devant et/ou derrière au moins une paroi latérale (58a, 58b) de la structure de support (50), et/ou
la structure de support (50) est réalisée de manière allongée et l'entraînement de déplacement (56) est disposé à au moins une extrémité longitudinale de la structure de support (50), et/ou
la plate-forme de construction (34) est saisie par le dessous par une ou plusieurs structures d'appui (70), par exemple un ou plusieurs bras d'appui (72), qui sont reliés à l'entraînement de levage (54) et peuvent être entraînés par celui-ci, lorsque la boîte de construction (30) est montée sur la structure de support (50), dans lequel éventuellement une ou plusieurs fentes (74, 78), à travers lesquelles s'étendent les une ou plusieurs structures d'appui (70), sont réalisées dans la structure de paroi latérale (32) de la boîte de construction (30) et/ou dans une structure de paroi latérale de structure de support (58).

4. Système de boîte de construction (10) pour une imprimante 3D (12) selon l'une quelconque des revendications 1 à 3,
dans lequel la structure de support (50) comprend une structure de paroi latérale de structure de support (58), laquelle entoure au moins par sections la structure de paroi latérale (32) de la boîte de construction (30) dans la direction périphérique, par exemple sur les deux côtés frontaux d'une boîte de construction (30) réalisée de manière allongée.

5. Système de boîte de construction (10) pour une imprimante 3D (12) selon la revendication 4,
dans lequel la structure de paroi latérale de structure de support (58) entoure par sections la structure de paroi latérale (32) de la boîte de construction (30) dans la direction périphérique avec réalisation d'un évidement (60), lequel évidement (60) est dimensionné de telle sorte que la boîte de construction (30) peut être retirée latéralement de la structure de support (50) et/ou à nouveau montée sur la structure de support (50) à travers l'évidement (60),
dans lequel éventuellement la structure de paroi latérale de structure de support (58) comprend deux évidements (60) opposés, lesquels sont respectivement dimensionnés de telle sorte que la boîte de construction (30) peut être retirée latéralement de la structure de support (50) et/ou à nouveau montée sur la structure de support (50) à travers l'évidement (60) respectif,
dans lequel le au moins un évidement (60) s'étend éventuellement le long d'un côté long de la structure de paroi latérale (32) de la boîte de construction (30).

6. Système de boîte de construction (10) pour une imprimante 3D (12) selon la revendication 4 ou 5,
dans lequel, lorsque la boîte de construction (30) est disposée sur la structure de support (50), la boîte de construction
(30) est soutenue par la structure de support (50) de telle sorte qu'un bord supérieur de la structure de paroi latérale (32) de la boîte de construction (30) est disposé sensiblement à la même hauteur qu'un bord supérieur de la structure de paroi latérale de structure de support (58).

7. Système de boîte de construction (10) pour une imprimante 3D (12) selon l'une quelconque des revendications précédentes,
dans lequel la boîte de construction (30) a une forme rectangulaire en vue du dessus, avec deux parois latérales de boîte de construction courtes opposées (32b, 32d) et deux parois latérales de boîte de construction longues opposées (32a, 32c), et
dans lequel éventuellement la boîte de construction (30) a respectivement une ou plusieurs ouvertures de paroi latérale de boîte de construction (76), par exemple sous la forme d'une ou plusieurs fentes (78), sur une ou plusieurs parois latérales de boîte de construction (32a, 32b, 32c, 32d), par exemple sur chacune des parois latérales de boîte de construction courtes (32b, 32d), dans lequel les une ou plusieurs ouvertures de paroi latérale de boîte de construction (76) s'étendent par exemple verticalement vers le haut à partir d'un bord inférieur de la structure de paroi latérale de boîte de construction (32).

8. Système de boîte de construction (10) pour une imprimante 3D (12) selon l'une quelconque des revendications précédentes,
dans lequel la boîte de construction (30) comprend une structure de retenue (38) qui est conçue pour retenir la plate-forme de construction (34) dans une position la plus basse dans la boîte de construction (30),
dans lequel la structure de retenue (38) comprend par exemple une plaque (40), qui est disposée sur la structure de paroi latérale de boîte de construction (32), et/ou dans lequel la structure de retenue (38) est par exemple réalisée de telle sorte que la plate-forme de construction (34), dans sa position la plus basse, est disposée au-dessus des une ou plusieurs ouvertures de paroi latérale de boîte de construction (76) de la revendication 7.

9. Système de boîte de construction (10) pour une imprimante 3D (12) selon l'une quelconque des revendications précédentes,
dans lequel la structure de paroi latérale (32) de la boîte de construction (30) est fabriquée à partir de céramique, métal, par exemple métal coulé, acier inoxydable ou de combinaisons de ceux-ci, et/ou
dans lequel la plate-forme de construction (34) comprend un fond métallique, par exemple un fond en métal coulé, ou un fond en acier inoxydable ou un fond en céramique, et/ou
dans lequel un dispositif de chauffage est disposé sur et/ou dans la plate-forme de construction (34), et/ou
dans lequel la plate-forme de construction (34) comprend un dispositif d'évacuation, par exemple comprenant un fond perforé et un dispositif de fermeture, afin de retirer les matériaux particulaires de l'espace intérieur de boîte de construction (36), et/ou
dans lequel la structure de support (50) est réalisée de manière à ne pas résister aux micro-ondes et/ou la boîte de construction (30) est réalisée de manière à résister aux micro-ondes, et/ou
dans lequel la boîte de construction (30) est exempte de moyens de propulsion et/ou ne comprend pas d'éléments actifs.

10. Système de boîte de construction (10) pour une imprimante 3D (12) selon l'une quelconque des revendications précédentes, comprenant en outre
une ou plusieurs autres boîtes de construction (30), qui sont chacune interchangeables avec la boîte de construction (30) et peuvent être montées sur la structure de support (50), dans lequel les une ou plusieurs autres boîtes de construction (30) sont par exemple réalisées comme décrit dans l'une des revendications précédentes et/ou sont différentes de la première boîte de construction (30), et/ou
une ou plusieurs autres plateformes de construction (34), qui sont chacune interchangeables avec la plateforme de construction (34) et peuvent être reçues dans la structure de paroi latérale (32) de la boîte de construction (30), dans lequel les une ou plusieurs autres plateformes de construction (34) sont réalisées par exemple comme décrit dans la revendication 9 et/ou sont différentes de la première plateforme de construction (34), et/ou
un système de rails (14) ou système de rouleaux le long duquel la structure de support (50) avec la boîte de construction (30) montée dessus peut être déplacée, par exemple au moyen du propre entraînement de déplacement (56) selon la revendication 2 intégré dans la structure de support (50), et/ou
un dispositif de commande, qui est conçu pour commander l'entraînement de levage (54) et/ou l'entraînement de déplacement (56) et/ou le dispositif de chauffage et/ou le dispositif d'évacuation.

11. Système de boîte de construction (10) pour une imprimante 3D (12), comprenant :
une boîte de construction (30) avec une structure de paroi latérale (32) et une plateforme de construction (34) reçue à l'intérieur de la structure de paroi latérale (32), dans lequel la structure de paroi latérale (32) délimite un espace intérieur de boîte de construction (36) ouvert vers le haut pour la construction d'un composant par impression 3D, qui est délimité vers le bas par la plateforme de construction (34), et
une structure de support (50) qui comprend son propre entraînement (52) intégré dans la structure de support (50) et sur laquelle la boîte de construction (30) peut être montée de manière amovible, de sorte que la boîte de construction (30) peut être retirée de la structure de support (50) à plusieurs reprises après la construction du composant dans l'espace intérieur de boîte de construction (36) et ensuite montée à nouveau sur la structure de support (50),
dans lequel la boîte de construction (30) a une forme rectangulaire en vue du dessus, avec deux parois latérales de boîte de construction courtes opposées (32b, 32d) et deux parois latérales de boîte de construction longues opposées (32a, 32c), **caractérisé en ce que** la boîte de construction (30) a sur une ou plusieurs parois latérales de boîte de construction (32a, 32b, 32c, 32d), par exemple sur chacune de deux parois latérales de boîte de construction courtes opposées (32b, 32d), respectivement une ou plusieurs ouvertures de paroi latérale de boîte de construction (76), par exemple sous la forme d'une ou plusieurs fentes (78), dans lequel les une ou plusieurs ouvertures de paroi latérale de boîte de construction (76) s'étendent par exemple verticalement vers le haut à partir d'un bord inférieur de la structure de paroi latérale de boîte de construction (32).

12. imprimante 3D (12) comprenant un système de boîte de construction (10) selon l'une quelconque des revendications 1 à 11, comprenant en outre un enducteur pour appliquer par couches du matériau particulaire sur la plate-forme de construction (34) et/ou une tête d'impression pour imprimer sélectivement le matériau particulaire selon le procédé de projection de liant.

13. Système d'impression 3D comprenant une imprimante 3D (12) selon la revendication 12 et un ou plusieurs éléments choisis parmi :
un poste de déconditionnement pour déconditionner les composants construits de la boîte de construction (30),
un dispositif à micro-ondes et/ou un four, dans lequel la boîte de construction (30) peut être reçue, pour durcir et/ou sécher le composant disposé dans la boîte de construction (30).

14. Utilisation du système de boîte de construction (10) selon l'une quelconque des revendications 1 à 11, de l'imprimante 3D (12) selon la revendication 12 ou du système d'imprimante 3D selon la revendication 13
pour l'impression 3D de moules et/ou de noyaux de coulée et/ou
pour l'application par couches de matériau particulaire sur la plateforme de construction (34) et l'impression sélective du matériau particulaire dans le procédé de projection de liant.

15. Procédé d'impression 3D, comprenant :
la fournir d'un système de boîte de construction (10) pour une imprimante 3D (12) selon l'une quelconque des revendications 1 à 11, dans lequel la boîte de construction (30) est montée sur la structure de support (50),
la construction d'un composant par impression 3D dans l'espace intérieur de boîte de construction (36) de la boîte de construction (30) et
le retrait de la boîte de construction (30) de la structure de support (50), par exemple de manière automatisée,
comprenant en outre :
l'amenée de la boîte de construction (30) retirée à un post-processus, par exemple
le déconditionnement des composants construits de la boîte de construction (30) retirée, par exemple dans un poste de déconditionnement, et/ou
le durcissement et/ou séchage des composants construits dans la boîte de construction (30) retirée, par exemple dans un dispositif à micro-ondes et/ou un four, et/ou
le montage d'une boîte de construction (30) sur la structure de support (50), par exemple le montage à nouveau de la même boîte de construction (30) après que les composants construits ont été déconditionnés, ou le montage d'une autre boîte de construction (30), éventuellement suivi d'une nouvelle construction d'un composant par impression 3D dans l'espace intérieur de boîte de construction (36) de la boîte de construction (30).
